(19) Europäisches Patentamt
European Patent Office
Office européen des brevets

(11) **EP 3 884 349 B1**

(12) **EUROPÄISCHE PATENTSCHRIFT**

(45) Veröffentlichungstag und Bekanntmachung des Hinweises auf die Patenterteilung:
**21.02.2024 Patentblatt 2024/08**

(21) Anmeldenummer: **19828185.9**

(22) Anmeldetag: **20.11.2019**

(51) Internationale Patentklassifikation (IPC):
**G05B 19/418** (2006.01) **B25J 9/16** (2006.01)

(52) Gemeinsame Patentklassifikation (CPC):
**G05B 19/4183; B25J 9/1612; B25J 9/1679; B25J 9/1697;** B65G 2203/0258; G05B 2219/31313; G05B 2219/39571; G05B 2219/40564; Y02P 90/02

(86) Internationale Anmeldenummer:
**PCT/AT2019/060395**

(87) Internationale Veröffentlichungsnummer:
**WO 2020/102840 (28.05.2020 Gazette 2020/22)**

(54) **OPTIMIERUNGSVERFAHREN ZUR VERBESSERUNG DER ZUVERLÄSSIGKEIT EINER WARENKOMMISSIONIERUNG MIT EINEM ROBOTER**

OPTIMIZATION METHOD FOR IMPROVING THE RELIABILITY OF GOODS COMMISSIONING USING A ROBOT

PROCÉDÉ D'OPTIMISATION POUR L'AMÉLIORATION DE LA FIABILITÉ D'UNE PRÉPARATION DE COMMANDES DE MARCHANDISES AU MOYEN D'UN ROBOT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.11.2018 AT 510212018**

(43) Veröffentlichungstag der Anmeldung:
**29.09.2021 Patentblatt 2021/39**

(73) Patentinhaber: **TGW Logistics Group GmbH**
**4614 Marchtrenk (AT)**

(72) Erfinder:
 • **BEINHOFER, Maximilian**
  **4600 Thalheim bei Wels (AT)**
 • **BALASCH, Alexander**
  **4600 Wels (AT)**
 • **SCHRÖPF, Harald**
  **4600 Wels (AT)**

(74) Vertreter: **Burger, Hannes**
**Anwälte Burger & Partner**
**Rechtsanwalt GmbH**
**Rosenauerweg 16**
**4580 Windischgarsten (AT)**

(56) Entgegenhaltungen:
 **WO-A1-2016/100235  WO-A1-2018/017612**
 **WO-A1-2018/140746**

 • **CAUSO ALBERT ET AL: "A Robust Robot Design for Item Picking", 2018 IEEE INTERNATIONAL CONFERENCE ON ROBOTICS AND AUTOMATION (ICRA), IEEE, 21. Mai 2018 (2018-05-21), Seiten 7421-7426, XP033403483, DOI: 10.1109/ICRA.2018.8461057 [gefunden am 2018-09-10]**
 • **PARASCHIDIS K ET AL: "A robotic system for handling textile and non rigid flat materials", COMPUTERS IN INDUSTRY, ELSEVIER, AMSTERDAM, NL, Bd. 26, Nr. 3, 1. August 1995 (1995-08-01), Seiten 303-313, XP004002569, ISSN: 0166-3615, DOI: 10.1016/0166-3615(95)00022-V**

**Beschreibung**

Die Erfindung betrifft ein Optimierungsverfahren zur Verbesserung der Zuverlässigkeit einer Aufnahme und Abgabe von Waren entsprechend eines Auftrags in einem Kommissionierverfahren mit einem Roboter und eine Arbeitsstation.

Zur Steigerung der Kommissionierleistung werden eintönige und ermüdende Kommissionieraufgaben vermehrt automatisiert von einem Robotersystem durchgeführt. Damit jedoch ein solches Robotersystem einen Auftrag, insbesondere einen Kommissionierauftrag zuverlässig abarbeiten kann, ist es erforderlich, dass relevante Waren-Kenngrößen in einem hohen Zuverlässigkeitsgrad vorliegen. Als Robotersystem wird hier der die Warenmanipulation durchführende Roboter mit einer Greifeinheit und die zugehörige Steuerung verstanden. Unter Waren-Kenngrößen werden hierin zumindest eine Abmessung der Außenverpackung und/oder das Warengewicht verstanden.

Bei der Abarbeitung eines Auftrags benötigt ein Robotersystem vorab Information darüber, welche Anzahl an Waren vom Quell-Warenträger in den Ziel-Warenträger umzulagern ist und wie eine Ware vom Quell-Warenträger aufzunehmen ist (und ggf. wie eine Ware im Ziel-Warenträger abzugeben ist). Während der Kommissionierung muss vom Robotersystem geprüft werden, wie viele Warenstücke zur Erfüllung des Auftrags noch umzulagern sind. Wenn sich Waren an festgelegten Positionen am bzw. im Warenträger befinden, kann ein Roboter eine dieser Positionen anfahren und eine Ware zuverlässig aufnehmen. Sind die Waren jedoch in zufälliger, loser Ordnung vorhanden, muss in einem ersten Schritt festgestellt werden, wo sich im/am Warenträger die aufzunehmende Ware befindet. Darunter wird explizit verstanden, dass aus einer möglichen Mehrzahl aufnehmbarer Waren, eine bestmöglich aufzunehmende Ware bestimmt wird. Zumeist werden dazu Methoden der Bildverarbeitung eingesetzt, um in einem Abbild des Warenträgers, mögliche "Kandidaten" für die Aufnahme durch den Roboter zu finden. Bei der Bildverarbeitung wird daher beispielsweise versucht, im erfassten Abbild die Warengrenzen zu finden, um innerhalb dieser Grenzen eine mögliche Greifposition zu ermitteln. Abhängig von der Außenform der Ware (Karton, Polybag, usw.) sind diese Grenzen ggf. schwer zu erkennen, insbesondere wenn die Waren am/im Warenträger dicht angeordnet sind. Zur Verbesserung der Erkennung der Grenze / des Randes einer einzelnen Ware, können die Abmessungen der Warenaußenverpackung herangezogen werden, um eine Plausibilitätsprüfung bei der Bildverarbeitung durchführen zu können. Dadurch können beispielsweise Greifpositionen ausgeschlossen werden, für die eine Kantenlänge (die Länge einer ermittelten Warengrenze) ermittelt wurde, die nicht durch eine einzelne Ware entstehen kann.

Für die korrekte Abarbeitung des Auftrags ist es ferner von entscheidender Bedeutung, dass die korrekte Anzahl an Waren umgelagert wird. Bei gut zu greifenden Waren (Waren mit eindeutigen Greifpositionen) wird bei der Warenaufnahme durch den Roboter überwiegend nur eine Ware aufgenommen. Es sollen jedoch auch Waren kommissioniert werden, die beispielsweise eine unregelmäßige Außenform aufweisen und insbesondere auch Polybags. Unter Polybags wird Ware - oftmals Textilien - in einer Umverpackung aus einer weichen Kunststofffolie verstanden. Bei einer solchen Warenklasse kann es beim Aufnehmen durch den Roboter vorkommen, dass mehr als eine Ware aufgenommen wird - was jedenfalls erkannt werden muss, um einen Kommissionierfehler zu verhindern. Das Erkennen der aufgenommenen Waren wird beispielsweise über das Warengewicht realisiert, indem das aufgenommene Gewicht bzw. eine Gewichtsänderung des Quell- bzw. Ziel-Warenträgers erfasst wird.

Somit hängt die Zuverlässigkeit der Kommissionierung von Waren-Kenngrößen ab, die aufgrund ihres Ursprungs durchaus Schwankungen unterliegen können. Diese Kenngrößen werden beim Wareneingang im Zuge der Stammdatenanlage zumeist manuell ermittelt und als Waren-Stammdaten im Lager-Verwaltungssystem (Warehouse Management System WMS) hinterlegt, bevorzugt zusammen mit anderen Warendaten wie beispielsweise einer Artikelnummer. Da das Personal zumeist wenig Kenntnis über die Bedeutung einer korrekten Erfassung dieser Kenngrößen hat, können die erfassten Kenndaten oftmals nicht die erforderliche Genauigkeit bieten, die für eine zuverlässige Manipulation durch einen Roboter erforderlich ist. Ferner kann ein Hersteller, ohne die Artikelnummer zu ändern, in einem Aktionszeitraum, die Außenverpackung und/oder das Warengewicht ändern. Da die Artikelnummer unverändert bleibt, wird eine solche Änderung am Wareneingang nicht erkannt, führt aber bei der automatischen Kommissionierung plötzlich zu teils massiven Problemen, da die eingelernten bzw. verwendeten Waren-Kenndaten nicht mehr stimmen und somit Fehlaufnahmen aufgrund einer falschen Positionierung der Greifeinheit zunehmen werden. Oder es kommt bei der Ermittlung der aufgenommenen Anzahl zu Fehlern, da der Gewichtsvergleich plötzlich fälschlich Fehlaufnahmen anzeigt. Neben diesen Änderungen um einen nennenswerten Betrag, unterliegen Waren-Stammdaten herstellungsbedingt meist auch geringfügigen Schwankungen, die jedoch in einem automatisierten Prozess Störungen verursachen können und somit den Durchsatz des Kommissioniersystems verringern.

Die WO 2016/100235 A1 offenbart ein Verfahren, bei dem Greifstrategien für Waren bewertet und gewichtet werden. Welche Strategien verwendet werden, wird anhand von der Ware zugeordneten Informationen und über Sensoren gemessene Informationen entschieden. Der Greifvorgang und damit die Anwendung der entsprechenden Greifstrategie wird gemessen und bewertet.

Der vorliegenden Erfindung liegt die Aufgabe zugrunde, ein Kommissionierverfahren und eine Arbeitsstation mit einem Roboter derart auszugestalten, dass die Kommissionierleistung von geringfügigen und nennenswerten Schwankungen von Waren-Kenngrößen unabhängig wird.

Die Aufgabe der Erfindung wird durch die Maßnahmen gemäß Anspruch 1 gelöst.

Der Auftrag wird in einem Kommissionierverfahren von einem Roboter abgearbeitet, wobei der Roboter einen gegenüber einer Roboterbasis bewegbaren Roboterkopf mit einer Greifeinheit aufweist. Bei der Abarbeitung des Auftrags wird eine Ware mit der Greifeinheit von oder aus einem ersten Warenträger aufgenommen und in oder auf einen zweiten Warenträger abgelegt oder abgeworfen. Ein solcher Warenträger kann durch ein Ladehilfsmittel ausgebildet sein. Bevorzugt sind beide Warenträger durch Ladehilfsmittel gebildet. Das Ladehilfsmittel ist beispielweise ein Behälter, Karton oder Tablar. Daher werden die Waren in einem ersten Ladehilfsmittel bereitgestellt und in einem zweiten Ladehilfsmittel zusammengestellt. Der Warenträger kann aber auch durch ein Fördermittel, beispielsweise ein Gurtband, einer Fördereinrichtung gebildet sein, daher werden die Waren unmittelbar auf einer Förderfläche der Fördereinrichtung bereitgestellt. In einem Bildverarbeitungsschritt wird mittels eines opto-sensorischen Aufbereitungs- und Analysesystems eine Greifflächengröße und eine Greifflächenpose ermittelt und daraus eine Greifpose für die Greifeinheit berechnet. Danach wird die Greifeinheit in die berechnete Greifpose bewegt und die Ware von der Greifeinheit aufgenommen.

Gemäß der Erfindung wird im Bildverarbeitungsschritt bei der Ermittlung der Greifflächengröße zumindest eine Abmessung ermittelt. Die zumindest eine Abmessung wird dadurch ermittelt, indem von einem mit dem opto-sensorischen Aufbereitungs- und Analysesystem verbundenen, optischen Bilderfassungsmittel ein Abbild der Waren im oder am ersten Warenträger erstellt wird. Durch einen Vergleich dieser Abmessung mit Abmessungsbereichen wird eine Bereichs-Zuordnung ermittelt. Die Abmessungsbereiche sind dabei in einem Kenndatenfeld hinterlegt. Für diese Bereichs-Zuordnung wird ein Abmessungswert ermittelt und der ermittelten Abmessung zugeordnet. Diese Zuordnung erfolgt in Abhängigkeit eines Konfidenzwerts des Abmessungsbereichs, wobei sobald der Konfidenzwert über einem festlegbaren Schwellwert liegt, ein Normierungswert als Abmessungswert gewählt wird, unterhalb dieser Schwelle wird aus Waren-Stammdaten der Abmessungswert gewählt. Der Normierungswert und der Konfidenzwert des Abmessungsbereichs sind auch im Waren-Kenndatenfeld hinterlegt.

Ferner werden in einem Aufbereitungsschritt bei jeder Ermittlung von Abmessungswerten für die ermittelte Abmessung und für die Abmessungsbereiche eine mathematische Streuungsmaßfunktion angewendet und daraus Normierungswerte und Konfidenzwerte der Abmessungsbereiche adaptiert.

Der besondere Vorteil dieser Ausführung liegt darin, dass sich die Greifflächengröße und die Greifflächenpose stets mit hoher Zuverlässigkeit ermitteln lassen. Zu kommissionierende Waren können hinsichtlich der Abmessungen ihrer Außenverpackung geringfügigen Schwankungen unterliegen. Auch können Sonderverpackungen vorkommen, die trotz gleicher Artikelkennzeichnung, eine abweichende Außenverpackung - gegebenenfalls sogar eine deutlich abweichende Außenverpackung aufweisen. Ohne das gegenständliche Verfahren kann es bei der Bildverarbeitung zu einer fehlerhaften Ermittlung der Abmessungen kommen, sodass die Greifflächengröße und/oder die Greifflächenpose falsch oder zumindest ungenau ermittelt werden. Dies führt nachfolgend zu Problemen bei der Aufnahme durch die Greifeinheit des Roboters und damit direkt zu einem Fehler bei der Abarbeitung des Auftrags.

Unter dem Normierungswert wird jener Wert verstanden, der im Aufbereitungsschritt aus den im Bildverarbeitungsschritt ermittelten Abmessungen ermittelt wurde. Ohne Einschränkung weiterer Ausführungen kann das in einem sehr einfachen Fall ein arithmetischer Mittelwert sein. In weiteren erfindungsgemäßen Ausführungen sind andere Verfahren zur Bildung des Normierungswerts vorgesehen. Wie beschrieben, wird zur Ermittlung der zumindest einen Abmessung ein Abbild der Waren im oder am ersten Warenträger erstellt. Beispielsweise kann dieses Bilderfassungsmittel eine CCD-Kamera sein. Gemäß einer bevorzugten Ausführung ist das Bilderfassungsmittel durch eine 3D-Stereo-Kamera gebildet, die neben dem optischen Abbild auch eine Punktwolke von Abstandswerten liefert. Auch können mehrere Bilderfassungsmittel verwendet werden.

Neben den Abmessungen kann auch das Warengewicht Schwankungen unterliegen. Nach einer weiteren Ausführung ist daher vorgesehen, dass in einem der Aufnahme der Ware durch die Greifeinheit nachgelagerten Zählschritt die Anzahl der aufgenommenen Waren ermittelt wird. Dabei wird von einer Wiegevorrichtung ein Warengewicht ermittelt und dieses mit Gewichtsbereichen verglichen und eine Bereichs-Zuordnung ermittelt. Die Gewichtsbereiche sind auch im Kenndatenfeld hinterlegt. Für diese Bereichs-Zuordnung wird ein Anzahlwert ermittelt, wobei dieser in Abhängigkeit eines Konfidenzwerts des Gewichtsbereichs aus hinterlegten Waren-Stammdaten oder aus einem Normierungswert des Gewichtsbereichs ermittelt wird. Auch der Normierungswert und der Konfidenzwert des Gewichtsbereichs sind im Waren-Kenndatenfeld hinterlegt. Nachfolgend werden im Aufbereitungsschritt für das Warengewicht und für die Gewichtsbereiche eine mathematische Streuungsmaßfunktion angewendet und daraus Normierungswerte und Konfidenzwerte der Gewichtsbereiche ermittelt.

Gerade beim Warengewicht kann es zu größeren Streuungen kommen. Beispielsweise kann vom Hersteller im Zuge einer Sonderaktion die Füllmenge geändert werden, ohne die Außenverpackung und/oder die Waren-Artikelnummer zu ändern. Ohne dem erfindungsgemäßen Verfahren würde es zu Kommissionierfehlern kommen, da plötzlich ein hinterlegtes Stammdaten-Gewicht nicht mehr mit dem ermittelten Gewicht übereinstimmt und eine Kommissioniermenge nicht mehr korrekt bestimmbar ist. Durch die erfindungsgemäße Weiterbildung ist eine sehr rasche Anpassung an das abweichende Gewicht möglich, sodass der Kommissionierablauf nicht oder nur geringfügig gestört wird.

Der besondere Vorteil des Verfahrens liegt darin, dass geringfügige Schwankungen von physikalischen Warenkenngrößen, wie Außenabmessungen und Gewicht, aber auch eine (temporäre) deutliche Abweichung von Standardwerten, vom adaptiven Verfahren erfasst werden. Dadurch kann die weitere Verarbeitung an die geänderten Warenkenngrößen angepasst werden und somit eine Fehlkommissionierung vermieden werden.

Eine Weiterbildung besteht auch darin, dass alternativ zum Vergleich des ermittelten Warengewichts mit Gewichtsbereichen aus dem von der Wiegevorrichtung ermittelten Warengewicht und einem Normierungswert des Gewichts ein Quotient gebildet wird, wobei dieser Quotient skaliert und mit Gewichtsbereichen verglichen und eine Bereichs-Zuordnung ermittelt wird. Mit dieser Weiterbildung wird in vorteilhafter Weise eine einfache Möglichkeit geschaffen, aus dem ermittelten Warengewicht direkt auf die Anzahl der von der Greifeinheit aufgenommenen Waren zu schließen. Der Ganzzahlwert entspricht gemäß dieser Ausführung direkt der Anzahl der aufgenommenen Waren. Durch eine Auswertung der Nachkommastellen kann auf die Streuung des ermittelten Gewichts und damit auf eine Zuverlässigkeit des ermittelten Warengewichts geschlossen werden. Je kleiner die Differenz des Nachkommawerts zum nächstgelegenen Ganzzahlwert ist, desto genauer entspricht das ermittelte Warengewicht dem Normierungswert des Gewichts bzw. einem Vielfachen davon. Ist der Ganzzahlwert größer als eins, so wird der Quotient auf den Gewichtsbereich skaliert, der dem Ganzzahlwert des Quotienten entspricht, und für diesen Gewichtsbereich wiederum die Auswertung der Nachkommastellen durchgeführt.

Nach einer Weiterbildung ist auch vorgesehen, dass die Wiegevorrichtung vom Roboter, insbesondere der Greifeinheit, getrennt angeordnet ist und das Gewicht des ersten Warenträgers erfasst und der Zählschritt vor Abgabe der Ware erfolgt, insbesondere nach Aufnahme der Ware von oder aus dem ersten Warenträger und bevor die Greifeinheit den zweiten Warenträger erreicht. Diese Ausführung hat den Vorteil, dass die Ermittlung der Anzahl der aufgenommenen Waren sehr kurz nach der Aufnahme vom ersten Warenträger erfolgt. Somit kann bei einer Fehlaufnahme rasch reagiert werden, insbesondere bevor es eventuell zu einer Fehlabgabe in den zweiten Warenträger kommt. In einer bevorzugten Ausführung ist die Wiegevorrichtung derart angeordnet, dass das Gewicht des gesamten ersten Warenträgers ermittelt wird. Das aufgenommene Warengewicht wird daher als ein Differenzgewicht des ersten Warenträgers vor und nach der Entnahme der Waren ermittelt. Wenn der Roboter, insbesondere der Greifarm, die Ware aufnimmt und sich vom Warenträger wegbewegt, kommt es zu einer Beschleunigung der Ware. Ist die Wiegevorrichtung am Roboter bzw. am Greifarm angeordnet, wird diese Beschleunigung als zusätzliches Gewicht erfasst. Eine vom Roboter und insbesondere vom Greifarm getrennt angeordnete Wiegevorrichtung hat daher den Vorteil, dass eine Verfälschung des Warengewichts aufgrund der Beschleunigung der Ware verhindert wird. Somit ist eine Korrektur der sich überlagernden Gewichtsanteile bzw. eine Bewegungspause des Roboters zur Gewichtsmessung nicht erforderlich.

Eine Weiterbildung besteht auch darin, dass im Fall eines ermittelten Anzahlwerts größer als eins, eine Prüfung erfolgt, ob der ermittelte Anzahlwert die Sollmenge der zu kommissionierenden Ware überschreitet, wobei die Sollmenge im Auftrag hinterlegt ist, und bei Überschreitung ein Sonderbehandlungsschritt durchgeführt wird. Grundsätzlich ist bei einer robotergestützten automatischen Kommissionierung vorgesehen, dass vom Greifarm immer nur ein Stück einer Ware aufgenommen und dieser Vorgang solange durchgeführt wird, bis die Gesamtanzahl der zu kommissionierenden Waren umgelagert wurde. Durch die Anordnung der Waren in oder auf dem Quell-Warenträger kann es gelegentlich vorkommen, dass von der Greifeinheit mehr als eine Ware aufgenommen wird. Wesentlich für eine erfolgreiche Kommissionierung ist, dass die Gesamtanzahl der insgesamt bisher aufgenommenen Waren, die zu kommissionierende Anzahl an Waren nicht überschreitet. Mit dieser Weiterbildung wird nun geprüft, ob im Fall mehrerer aufgenommener Waren die Kommissionsmenge überschritten wurde und für diesen Fall anschließend ein Sonderbehandlungsschritt ausgeführt.

Es ist ferner vorgesehen, dass im Fall einer Überschreitung eines Grenzwerts des Anzahlwerts oder bei Überschreiten eines Bereichs-Grenzwerts bei der Ermittlung der Bereichs-Zuordnung ein Sonderbehandlungsschritt durchgeführt wird. Es kann Situationen geben, wo sich Waren verhaken oder wo mehrere Waren aneinanderhaften und somit von der Greifeinheit zu viele Waren aufgenommen werden. Das gegenständliche Verfahren ist gemäß einer bevorzugten Ausführung darauf ausgerichtet, eine Fehlaufnahme von bis zu drei Waren zu tolerieren. Es wird darauf hingewiesen, dass das Verfahren nicht auf diese Anzahl eingeschränkt ist. Ist das ermittelte Warengewicht nun größer als durch die hinterlegten Gewichtsbereiche abdeckbar, wird davon ausgegangen, dass eine undefinierte Anzahl von Waren oder eine falsche Ware aufgenommen wurde. Der Kommissioniervorgang darf in diesem Fall nicht weitergeführt werden, es wird daher die Sonderbehandlung ausgelöst.

Eine Weiterbildung besteht darin, dass der Normierungswert des Gewichts mittels einer mathematischen Gewichtungsfunktion aus allen Normierungswerten der Gewichtsbereiche gebildet wird. Durch die Berücksichtigung aller Normierungswerte der Gewichtsbereiche (im Beispiel 3) gemäß der Formel

$$\widehat{\omega} = \frac{1}{3}\left(\mu_1 + \frac{\mu_2}{2} + \frac{\mu_3}{3}\right)$$

liefern alle einzelnen Normierungswerte ($\mu$) einen gewichteten Beitrag zum ermittelten Gewicht einer einzelnen Ware. Es wird darauf hingewiesen, dass auch andere mathematische Gewichtungsfunktionen zur Bildung des Normierungswerts des Gewichts verwendet werden können.

Nach einer weiteren möglichen Ausbildung ist vorgesehen, dass für den Nachkommawert des Quotienten eine Bereichsklassifikation durchgeführt wird, wobei für einen ersten Bereich der Anzahlwert durch den Ganzzahlanteil des Quotienten festgelegt wird und für einen zweiten Bereich eine Sonderbehandlung durchgeführt wird. Der Nachkommawert des Quotienten gibt einen direkten Hinweis auf die Abweichung vom Normierungswert der aktuell von der Greifeinheit aufgenommenen Ware(n). Insbesondere wenn mehr als eine Ware aufgenommen wurde, überlagern sich die Gewichtstoleranzen der Waren und können sich dabei auch derart überlagern, dass der Nachkommawert in einen Gewichtsbereich fällt, der außerhalb des Gewichtsbereichs des korrespondierenden Ganzzahlanteils liegt. Somit ist eine eindeutige Ermittlung des Anzahlwerts nicht mehr möglich und es wird eine Sonderbehandlung durchgeführt. Um jeden Ganzzahlanteil existiert ein erster Bereich, in welchem die Schwankungsbreite der erfassten Werte (Abmessung und Gewicht) eindeutig dem Ganzzahlanteil zugeordnet werden kann. Bei Aufnahme mehrerer Waren kann es jedoch zufällig vorkommen, dass sich die Schwankungsbreiten so ungünstig überlagern, dass der Nachkommawert in einem zweiten Bereich liegt. In diesem Fall kann nicht zuverlässig gewährleistet werden, dass der ermittelte Normierungswert der tatsächlichen Anzahl an Waren an der Greifeinheit entspricht. Beispielsweise kann dann mittels der Sonderbehandlung geprüft werden, ob durch Wahl des nächstgelegenen (anderen) Normierungswerts und dadurch bedingt, eine andere Verteilung des ersten und zweiten Bereichs des Nachkommawerts, eine eindeutige Zuordnung erreicht werden kann. Bei Wahl des nächstgelegenen Normierungswerts kann der Nachkommawert dann im ersten Bereich liegen und so eine eindeutige Zuordnung ermöglichen.

Eine weitere Ausbildung des gegenständlichen Verfahrens besteht darin, dass für einen dritten Bereich die Konfidenzwerte der beiden angrenzenden Gewichtsbereiche analysiert werden und das Warengewicht aus dem Normierungswert des Gewichtsbereichs mit dem höheren Konfidenzwert ermittelt wird. Die Gewichtstoleranzen der Warengewichte können sich beispielsweise aber auch derart überlagern, dass der Quotient bzw. der Nachkommaanteil genau im Übergangsbereich zweier Gewichtsbereiche liegt. Gemäß dieser vorteilhaften Weiterbildung werden die Konfidenzwerte der beiden Gewichtsbereiche verglichen und das Warengewicht auf Basis jenes Gewichtsbereichs ermittelt, der den höheren Konfidenzwert hat. Der Konfidenzwert gibt eine Aussage über die Güte der Zuordnung von Gewichtswerten zu Wertebereichen. Je größer der Konfidenzwert ist, desto sicherer gehört ein spezifisches ermitteltes Warengewicht zu einem Gewichtsbereich. Diese Weiterbildung erhöht daher die Zuverlässigkeit der Ermittlung des Warengewichts, da eine unwahrscheinlichere Zuordnung aufgrund der Betrachtung des Konfidenzwerts ausgeschlossen wird.

Dahingehend ist nach einer Weiterbildung auch vorgesehen, dass bei der Ermittlung der Bereichs-Zuordnung eine Prüfung durchgeführt wird, ob sich die ermittelte Abmessung in einem Überlappungsbereich zweier Abmessungsbereiche befindet. Im Fall einer positiven Prüfung wird ein Sonderbehandlungsschritt durchgeführt. Die im oder am ersten Warenträger angeordneten Waren können beispielsweise eine Außenverpackung aufweisen, bei der sich zumindest zwei Abmessungskomponenten nur gering voneinander unterscheiden. Im Bildverarbeitungsschritt kann es daher vorkommen, dass eine Abmessung ermittelt wird, die im Übergangsbereich zweier möglicher Abmessungsbereiche liegt und somit nicht eindeutig zuordenbar ist. Um den Auftrag zuverlässig abschließen zu können ist daher vorgesehen, in einem Sonderbehandlungsschritt diese Zweideutigkeit aufzulösen.

Nach einer Ausbildung ist vorgesehen, dass bei einer ermittelten Lage der Abmessung im Überlappungsbereich ein Sonderbehandlungsschritt der Bildverarbeitungsschritt erneut durchgeführt wird. Eine Möglichkeit eine nicht eindeutige Zuordnung einer ermittelten Abmessung zu einem Abmessungsbereich aufzulösen besteht darin, die Abmessung erneut zu ermitteln. Bevorzugt wird daher von einem Bilderfassungsmittel ein neues Abbild erfasst und die einzelnen Schritte der Bilderkennung nochmals durchgeführt. Bei einer erneuten Bilderfassung können beispielsweise geänderte Lichtverhältnisse herrschen und/oder wird die Bilderkennung einen anderen Startpunkt wählen, wodurch die Verfahrensschritte der Bilderkennung zu einem anderen und möglicherweise eindeutig zuordenbaren Ergebnis für die Abmessung kommen. Dieser Schritt kann auch nochmals oder mehrmals durchgeführt werden, gegebenenfalls unter Aktivierung von Beleuchtungsmitteln, um einen verbesserten Kontrast für die Bilderkennung zu schaffen.

Eine weitere mögliche Sonderbehandlung besteht darin, dass im Sonderbehandlungsschritt der Roboter angesteuert wird den Roboterkopf zum ersten Warenträger zu bewegen, eine Ware aufzunehmen und wieder abzulegen und dass anschließend die Bildverarbeitung erneut durchgeführt wird. Für den Fall, dass im Bildverarbeitungsschritt kein eindeutiger Abmessungswert ermittelt werden kann, kann gemäß dieser Weiterbildung vorgesehen sein, durch eine Umlagerung einer Ware im ersten Warenträger, eine günstigere Ausgangssituation für die Bilderkennung herzustellen. Durch diese Umlagerung wird sich die Anordnung der Waren im ersten Warenträger ändern, wodurch der Bildverarbeitung ein neu erfasstes Abbild zur Verfügung steht. Gegebenenfalls kann auch dieser Schritt mehrfach durchgeführt werden.

Eine weitere mögliche Ausbildung der Sonderbehandlung besteht darin, dass im Sonderbehandlungsschritt der Roboter angesteuert wird den Roboterkopf zum ersten Warenträger zu bewegen und die aufgenommene Ware im oder am ersten Warenträger abzulegen oder abzuwerfen und dass die Bildverarbeitung erneut durchgeführt wird. Wenn keine eindeutige Zuordnung des ermittelten Gewichts zu einem Gewichtsbereich möglich ist, ist es im Hinblick auf eine zuverlässige Ausführung des Auftrags von Vorteil, die aufgenommenen Waren (bzw. die Waren) wieder zurück in den ersten Warenträger zu geben und anschließend das gesamte Verfahren erneut zu starten. Durch die Rückgabe der aufgenommenen Ware in den ersten Warenträger wird es zu einer Änderung der Anordnung der Waren im oder am Warenträger kommen, wodurch für die anschließend erneut durchgeführten Verfahrensschritte (Bildverarbeitungs-, Aufbereitungs- und Zählschritt) eine neue Ausgangsbasis geschaffen wird.

Nach einer Weiterbildung ist ferner vorgesehen, dass im Aufbereitungsschritt für den zugeordneten Bereich der Normierungswert als Mittelwert einer Normalverteilung festgelegt wird. Diese Ausführung ist eine Möglichkeit, aus den ermittelten Werten für das Warengewicht bzw. für ermittelte Abmessungswerte, einen verlässlichen Wert für den jeweiligen Parameter zu bekommen. Die Einzelwerte von Messreihen physikalischer Größen, wie dem Gewicht und/oder der Abmessung, unterliegen meist geringfügigen, zufälligen Schwankungen. Die einzelnen Werte werden sich aber um einen mittleren Wert häufen, größere Abweichungen von diesem Häufungswert werden eher selten sein. Ein solches Messergebnis kann als Normalverteilung interpretiert werden, für welche ein mathematisches Modell zur Berechnung existiert, mit dem sich der Normierungswert als Mittelwert der Normalverteilung ermitteln lässt.

Eine vorteilhafte Weiterbildung besteht insbesondere darin, dass die Streuungsmaßfunktion einen Expectation-Maximization Algorithmus umfasst und dass ermittelte Werte, Abmessungen bzw. Gewichtswerte, iterativ zu lokalen Häufungen zusammengefasst werden. Bei einem Zufallsprozess, als welcher die Ermittlung von Abmessungswerten bzw. Gewichtswerten angesehen werden kann, kann es immer wieder vorkommen, dass ein ermittelter Wert deutlich vom mittleren Häufungswert abweicht. Im gegenständlichen Fall, wo mehrere mögliche und gültige Abmessungs- bzw. Gewichtswerte existieren, kann es daher vorkommen, dass ein streuender Wert in den Bereich eines anderen Häufungswerts fällt und somit fälschlich diesem zugerechnet werden würde. Mit der gegenständlichen Weiterbildung wird ein iterativer Prozess ausgeführt, der die einzelnen ermittelten Werte zu lokalen Häufungen zusammenzufassen versucht (clustering), um dadurch ein besseres Ergebnis für die Zugehörigkeit der Messwerte zu lokalen Häufungswerte zu bekommen. Da die mathematische Theorie zu diesem Verfahren an sich bekannt ist, wird hierin nicht weiter darauf eingegangen.

Es wird darauf hingewiesen, dass für die Beschreibung der mathematischen Verfahren gleichbedeutend die Begriffe Messwert und ermittelter Wert verwendet werden.

Eine Weiterbildung besteht auch darin, dass auf die zusammengefassten Werte eine Wahrscheinlichkeitsverteilung angewendet wird, insbesondere eine Normalverteilung, und dass für lokale Häufungen ein Mittelwert und eine Mittelwertstreuung ermittelt werden und der Mittelwert als Normierungswert festgelegt wird. Auf die vom Expectation-Maximization Algorithmus iterativ ermittelten lokalen Häufungen wird jeweils eine Normalverteilung angewendet, um durch die iterative Variation die Mittelwertstreuung zu minimieren.

Dahingehend ist eine vorteilhafte Weiterbildung auch dadurch gekennzeichnet, dass die Streuungsmaßfunktion eine Summe gewichteter Normalverteilungen (Mixture of Gaussians) umfasst und ermittelte Werte, Abmessungen bzw. Gewichtswerte, iterativ zu lokalen Häufungen zusammengefasst werden. Gewichtete Normalverteilungen, insbesondere *mixed models,* sind ein Wahrscheinlichkeitsmodell zur Darstellung normalverteilter Teilergebnisse innerhalb einer Gesamtmenge an Ergebnissen. Um aus den Teilergebnissen das Modell zu lernen, wird der Expectation-Maximization Algorithmus verwendet, der in einem *expectation step* immer abwechselnd die Teilergebnisse den verschiedenen Normalverteilungen zuordnet und in einem *maximization step* basierend auf den gemachten Zuordnungen die Parameter der Normalverteilungen optimiert.

Eine Weiterbildung besteht auch darin, dass in einem Adaptierungsschritt die Abmessungsbereiche an die im Aufbereitungsschritt ermittelten Normierungswerte angepasst werden, oder dass im Adaptierungsschritt die Gewichtsbereiche an die im Aufbereitungsschritt ermittelten Normierungswerte angepasst werden. Das gegenständliche Verfahren ist als adaptives Verfahren ausgebildet, sodass jede neu ermittelte Abmessung und/oder jedes neu ermittelte Warengewicht einen Beitrag zu den jeweiligen Abmessungs- bzw. Gewichtsbereichen liefert.

Nach einer Weiterbildung ist vorgesehen, dass für jeden Abmessungsbereich und/oder jeden Gewichtsbereich der Konfidenzwert aus einer Streuung des Normierungswerts ermittelt wird, und/oder dass der Konfidenzwert aus der Anzahl der durchgeführten Aufbereitungsschritte ermittelt wird. Mit dieser Weiterbildung wird eine Aussage möglich, wie gut die einzelnen ermittelten Wertebereiche die tatsächlich vorkommenden ermittelten Abmessungs- und/oder Gewichtswerte widerspiegeln. Bei einer nur sehr geringen Streuung der ermittelten Werte wird sich ein hoher Konfidenzwert ergeben, da dann auch die Normierungswerte nur sehr geringen Schwankungen unterliegen. Beispielsweise kann es bei einer Waren-Außenverpackung mit sehr unklaren Außenabmessungen vorkommen, dass sich zumindest eine Warengrenze im Bildverarbeitungsschritt nicht klar ermitteln lässt und somit die ermittelten Werte stärker streuen werden. In einem solchen Fall wird auch der Konfidenzwert gering sein. Es ist auch möglich, um beim Beispiel der Abmessungen zu bleiben, dass sich nur eine Abmessungskomponente schlecht erfassen lässt, andere jedoch gut. Da nach der gegenständlichen Ausbildung der Konfidenzwert für jeden Gewichtsbereich ermittelt wird, wird die streuende Abmessungskomponente und damit der zugeordnete Abmessungsbereich, einen kleinen Konfidenzwert haben, eine andere Komponente mit dem zugeordneten Abmessungsbereich einen höheren Konfidenzwert. Ferner hat auch die Anzahl der durchgeführten Aufbereitungsschritte einen Einfluss auf den Konfidenzwert. Mit steigender Anzahl durchgeführter Aufbereitungsschritte (bei geringer Streuung) steigt auch die Sicherheit, dass der ermittelte Normierungswert die realen Verhältnisse widerspiegelt. Dies bedeutet, dass bei gering streuenden Messwerten der Konfidenzwert zunehmen wird, im Gegenzug aber auch, dass bei stark streuenden Messwerten der Konfidenzwert abnehmen wird.

Nach einer weiteren Ausbildung ist vorgesehen, dass bei der Bildung des Normierungs- und Konfidenzwerts eine Fensterfunktion jeweils auf die ermittelten Abmessungen und Warengewichte angewendet wird. Mit einer Fensterfunktion wird die Anzahl der im Aufbereitungsschritt betrachteten Messwerte beschränkt und somit eine gleitende Ermittlung der Normierungs- und Konfidenzwerte erreicht. Durch die Fensterbreite lässt sich die Sensitivität des Verfahrens einstellen, insbesondere wird darüber quasi die Reaktionszeit auf sich ändernde Warenparameter beeinflusst. Je kleiner das Fenster gewählt wird, desto schneller reagiert das gegenständliche Verfahren auf sich ändernde Messwerte und kann sich somit frühzeitig beispielsweise auf eine geänderte Außenverpackung und/oder auf eine geänderte Inhaltsmenge anpassen (beispielsweise wenn vom Hersteller bei gleicher Warennummer eine Aktionsware auf den Markt gebracht wird).

Nach einer Weiterbildung ist auch vorgesehen, dass die Waren-Stammdaten von einem übergeordneten Lagerverwaltungssystem an das Aufbereitungs- und Analysesystem übermittelt und in diesem in einem Speichermittel abgelegt werden. Da die gesamte Verwaltung der zu kommissionierenden Waren im übergeordneten Lagerverwaltungssystem (Warehouse Management System WMS) erfolgt, ist es von Vorteil, wenn dieses auch den initialen Waren-Stammdatensatz an das Aufbereitungs- und Analysesystem übermittelt, da dadurch Arbeitsschritte eingespart und Fehlerquellen vermieden werden. Dieser Waren-Stammdatensatz umfasst jedenfalls eine eindeutige Warenkennzeichnung, beispielsweise eine Artikelnummer des WMS oder einen artikeleigenen Code, beispielsweise einen EAN. Ferner werden charakteristische bzw. wesentliche Abmessungsdaten enthalten sein, beispielsweise Länge, Breite, Höhe bei quaderförmigen Außenverpackungen bzw. des kleinsten umhüllenden Quaders. Unter charakteristischen Abmessungen werden jene Abmessungen verstanden, die bei Anordnung der Ware im ersten Warenträger bevorzugt optisch erfassbar sein werden. Ferner wird im Waren-Stammdatensatz auch noch das Gewicht der Ware abgelegt sein. Die charakteristischen Abmessungen und das Gewicht werden beim Wareneingang zumeist manuell erfasst und in das WMS eingegeben.

Eine vorteilhafte Weiterbildung besteht auch darin, dass bei fehlenden Waren-Stammdaten eine Folge von Warenumlagerungen zwischen dem ersten und zweiten Warenträger durchgeführt und aus den jeweils ermittelten Abmessungen bzw. Warengewichten das Waren-Kenndatenfeld mit Normierungswerten und Konfidenzwerten für Abmessungen und/oder Warengewichte aufgebaut wird. Zumeist werden Waren-Stammdaten, inklusive einer eindeutigen Warenidentifikation, von einem Lagerverwaltungssystem (Warehouse Management System WMS) bereitgestellt. Mit der gegenständlichen Weiterbildung ist es jedoch auch möglich, dass ohne initiale Daten aus dem WMS begonnen wird eigene Waren-Kenndaten aufzubauen. Dazu wird der Roboter angesteuert, eine Ware aus dem ersten Warenträger zu greifen und in den zweiten Warenträger umzulagern. Die erfindungsgemäßen Verfahrensschritte werden ausgeführt, im Aufbereitungsschritt wird das Waren-Kenndatenfeld aufgebaut und im Kenndatenfeld hinterlegt. Insbesondere werden die Abmessungsbereiche mit den jeweiligen Normierungs- und Konfidenzwerten und/oder die Gewichtsbereiche mit den jeweiligen Normierungs- und Konfidenzwerten aufgebaut. Die Umlagerungen werden in einer vordefinierten Anzahl ausgeführt, sodass im Anschluss ein Satz von Waren-Kenndaten für den weiteren Ablauf des Verfahrens zur Verfügung steht. Basierend auf einer mathematischen Abschätzung bzw. auf Erfahrungsdaten ist die Anzahl dabei so gewählt, dass ein zuverlässiges Kenndatenfeld aufgebaut werden kann. Bei diesen Umlagerungen ist es jedenfalls erforderlich, dass die Waren im ersten Warenträger sortenrein vorliegen.

Zur Beschleunigung des Kenndatenaufbaus ist gemäß einer Weiterbildung vorgesehen, dass aus einer Folge von Normierungs- oder Konfidenzwerten der Abmessungen und/oder der Warengewichte, eine Schwankungsbreite ermittelt wird, und die Warenumlagerungen bei Unterschreiten einer Schwelle der Schwankungsbreite beendet wird. Der Umlagerungsvorgang kann, wie vorgeschlagen, in einer bestimmten Anzahl beliebig oft ausgeführt werden. Es kann aber auch geprüft werden, wie stark sich der Normierungswert und/oder der Konfidenzwert nach jedem oder nach mehreren Umlagerungsvorgängen ändert, und es wird bei nur noch geringen Änderungen der Umlagerungsvorgang abgebrochen. Zu Beginn des Umlagerungsvorgangs werden sich Normierungs- und/oder Konfidenzwerte stark ändern, dann aber gegen einen Wert tendieren bzw. sich um diesen einpendeln. Je länger das Verfahren durchgeführt wird, desto geringer werden die Schwankungen ausfallen, die Schwankungsbreite wird also kleiner. Gemäß der gegenständlichen Weiterbildung kann nun bei Unterschreiten eines Schwellwerts der Schwankungsbreite das Umlagern abgebrochen werden, da die erreichte Genauigkeit für das eigentliche Kommissionierverfahren ausreichend ist. Während der Kommissionierung werden die Kenndaten im Aufbereitungsschritt kontinuierlich adaptiert, insbesondere verbessert.

Nach einer Weiterbildung ist auch vorgesehen, dass eine vollständige Umlagerung durchgeführt und der Warenträger vollständig geleert wird. Nach der Umlagerung werden der bzw. die ermittelten Normierungswerte und der bzw. die Konfidenzwerte analysiert. Konnte durch diesen Umlagerungsvorgang eine ausreichend hohe Datenqualität erreicht werden, was sich in einem entsprechend hohen Konfidenzwert widerspiegelt, kann der initiale Kenndaten-Bildungsschritt beendet werden. Gegebenenfalls kann eine vollständige Umlagerung auch darin bestehen, dass ein Quell-Warenträger vollständig in einen Ziel-Warenträger umgelagert wird und danach der Ziel-Warenträger zurück in den Quell-Warenträger umgelagert wird. Ferner ist auch möglich, dass während der Umlagerung der/die Normierungswerte und der/die Konfidenzwerte analysiert werden und bei einer ausreichenden Datenqualität der Umlagerungsvorgang umgekehrt wird, sodass die bereits umgelagerten Waren wieder zurück in den Ausgangswarenträger bewegt werden.

Nach einer vorteilhaften Weiterbildung ist auch vorgesehen, dass bei einem hohen Konfidenzwert für einen Abmessungs-Normierungswert oder für einen Gewichts-Normierungswert, eine automatisierte oder teilautomatisierte Aktualisierung der Waren-Stammdaten durchgeführt wird. Waren-Stammdaten, wie sie vom Lagerverwaltungssystem (Warehouse Management System WMS) bereitgestellt werden, können wie bereits beschrieben von den realen Abmessungs- bzw. Gewichtswerten abweichen, was oftmals im Wareneingangsprozess nicht erfasst wird. Daher werden die mit dem gegenständlichen Verfahren ermittelten Werte (Abmessungen und/oder Gewicht) nicht mehr mit den vom WMS bereitgestellten Werten übereinstimmen. Durch das gegenständliche Verfahren werden sich jedoch die jeweiligen Normierungswerte an die neu ermittelten Werte anpassen und demzufolge wird auch der Konfidenzwert steigen. Ab einem Schwellwert des Konfidenzwerts haben die mit dem gegenständlichen Verfahren ermittelten Normierungswerte eine höhere Zuverlässigkeit als die Daten aus dem WMS. Insbesondere bedeutet das dann auch, dass die Waren-Stammdaten fehlerhaft sein müssen, da es sonst zu keiner deutlichen Abweichung kommen dürfte. Bei einer automatisierten Aktualisierung der Waren-Stammdaten, werden die mit dem gegenständlichen Verfahren ermittelten Waren-Kenndaten direkt an das WMS übergeben und von diesem erfolgt dann eine Aktualisierung der Waren-Stammdaten. Bei einer teilautomatisierten Aktualisierung erfolgt eine Meldung an das WMS oder an einen zuständigen Betreuer, wobei die tatsächliche Aktualisierung manuell angestoßen werden muss.

Die Aufgabe der Erfindung wird auch durch die Merkmale gemäß Anspruch 25 gelöst.

Die Arbeitsstation, insbesondere Kommissionierstation, umfasst eine Andienungsvorrichtung für einen oder mehrere Warenträger, einen Roboter mit einem gegenüber einer Roboterbasis bewegbaren Roboterkopf mit einer Greifeinheit zur Umlagerung von Waren zwischen Warenträgern, eine Bilderfassungseinrichtung und eine zur Steuerung des Roboters (und gegebenenfalls der Fördertechnik) und ferner zur Auswertung von Daten der Bilderfassungseinrichtung ausgebildete Datenverarbeitungseinheit. Es ist vorgesehen, dass die Datenverarbeitungseinheit zur Durchführung eines gegenständlichen Optimierungsverfahren ausgebildet ist.

Der Vorteil dieser Ausführung liegt darin, dass eine Vorrichtung zur Durchführung des gegenständlichen Verfahrens sehr einfach in einem Kommissioniersystem integriert werden kann. Insbesondere ist von Vorteil, dass sich die gegenständliche Arbeitsstation auch zum Austausch bzw. zur Erweiterung bestehender Kommissioniersysteme eignet. Somit können auch bestehende Kommissioniersysteme um eine automatische Kommissionierung erweitert werden.

In einer möglichen Ausführung wird der Roboter an einer Kommissionierstation eingesetzt und mittels der Greifeinheit die Waren von oder aus einem ersten Warenträger aufgenommen und in oder auf einen zweiten Warenträger abgelegt oder abgeworfen und dabei das erfindungsgemäße Optimierungsverfahren ausgeführt. Der Roboter kann aber auch an einer Packstation eingesetzt werden, wo die Waren zu einem Auftrag (ohne Bezug zu einem konkreten Kommissionierauftrag) in beschriebener Weise von oder aus einem ersten Warenträger aufgenommen und in oder auf einen zweiten Warenträger abgelegt oder abgeworfen und dabei das erfindungsgemäße Optimierungsverfahren ausgeführt. Mit anderen Worten ist der Einsatz des Roboters an einer und mit einem Roboter ausgestatteten, beliebigen Arbeitsstation einsetzbar, um das erfindungsgemäße Optimierungsverfahren auszuführen. Die Arbeitsstation kann eine zur Steuerung des Roboters (und gegebenenfalls der Fördertechnik) und ferner zur Auswertung von Daten der Bilderfassungseinrichtung ausgebildete Datenverarbeitungseinheit umfassen. Anderseits kann die Datenverarbeitungseinheit an einer zentralen Rechnereinheit ausgebildet sein. Die Datenverarbeitungseinheit dient zur Durchführung des erfindungsgemäße Optimierungsverfahren.

Die Andienungsvorrichtung kann durch einen Abstellplatz auf einem Ablagetisch oder einer Fördertechnik zum An- und Abtransport von Warenträgern ausgebildet sein. Der Roboter ist beispielsweise durch einen Knickarmroboter oder einen Portalroboter gebildet.

Nachfolgend findet sich eine Definition hierin verwendeter Begriffe.

Unter einem Roboter werden Bewegungsautomaten mit mehreren Achsen verstanden, insbesondere Knickarm- und Portalroboter. Beide Systeme sind dazu ausgebildet, einen Roboterkopf innerhalb eines Koordinatenraums relativ zu einer Roboterbasis zu positionieren und an der festgelegten Koordinate mit einer am Roboterkopf angeordneten Greifeinheit Manipulationshandlungen durchzuführen. Die Positionierung des Roboterkopfs, in dem durch die mechanische Struktur des Roboters festgelegten Koordinatenraum, erfolgt meist programmgeführt mittels eines numerischen Steuerungssystems.

Ein Auftrag wird als Datensatz elektronisch erfasst und von der Datenverarbeitungseinheit verarbeitet. Der Auftrag ist nicht zwingenderweise mit einem Kommissionierauftrag gleichzusetzen, sondern kann auch ein Umpackauftrag, Nachschubauftrag, und dgl. sein. Unter einem Kommissionierauftrag wird die Zusammenstellung angeforderter Waren eines Kundenauftrags verstanden. Eine Kundenbestellung umfasst zumindest einen Auftrag. Jeder Auftrag umfasst eine oder mehrere Auftragszeilen. Spezifiziert der Auftrag mehrere Auftragszeilen, so werden unterschiedliche Waren benötigt. Im E-Commerce sind die Losgrößen klein, sodass eine verhältnismäßig hohe Anzahl an unterschiedlichen Aufträgen mit jeweils wenigen Auftragszeilen vorliegt. Von einem Umpackauftrag wird gesprochen, wenn beispielsweise Waren im Wareneingang von einem Anliefergebinde (erster Warenträger) auf einen oder in einen zweiten Warenträger umzuladen sind. Unter einem Nachschubauftrag versteht man das Auffüllen von Waren auf einen oder in einen Warenträger.

Unter Ware oder SKU (stock keeping unit) wird die kleinste kommissionierbare Warenverpackung verstanden. Diese Einheit kann aus einem einzelnen Artikel bestehen, es ist jedoch auch möglich, dass eine Ware mehrere Artikel umfasst, die jedoch für die Kommissionierung nicht trennbar zusammengefasst sind. Es wird darauf hingewiesen, dass der Normierungswert und der Konfidenzwert für das Gewicht und Abmessung grundsätzlich vergleichbar sind und im Wesentlichen dieselbe Aussage erlauben. Dementsprechend sind die Beschreibungen einzelner Vorteile grundsätzlich auf beide Werteklassen zu verstehen, außer wenn explizit auf Abmessungen oder Gewicht gerichtet.

Im Lagerverwaltungssystem (Warehouse Management System WMS) werden bevorzugt im Wareneingangsprozess charakteristische Waren-Kenngrößen erfasst und als Waren-Stammdaten in einem Speichermittel des WMS hinterlegt. Diese Waren-Stammdaten können im Zuge einer Erstinitialisierung an das gegenständliche Optimierungsverfahren übermittelt und beispielweise in einem Speichermittel des Aufbereitungs- und Analysesystems hinterlegt werden. Die durch das bzw. mit dem gegenständlichen Verfahren ermittelten und möglicher Weise abweichenden Kenngrößen werden als Waren-Kenndaten beispielsweise ebenfalls im Speichermittel des Aufbereitungs- und Analysesystems hinterlegt.

Das Aufbereitungs- und Analysesystem ist als Steuerungssystem des Systems zur Durchführung des gegenständlichen Verfahrens zu verstehen. Insbesondere ist darunter auch die Robotersteuerung zusammengefasst, die basierend auf den ermittelten Koordinaten der Greifpose, den Roboterkopf mit der Greifeinheit an die gegebene Position im Koordinatenraum bewegt. Die Robotersteuerung kann im Aufbereitungs- und Analysesystem integriert sein, es ist jedoch auch eine eigenständige Ausführung mit einer Anbindung über eine Schnittstelle möglich. Für das gegenständliche Verfahren ist die integrierte Betrachtung vorgesehen.

Unter einer mathematischen Streuungsmaßfunktion wird hierin ein mathematisches Berechnungsmodell verstanden, mit denen sich (zumeist geringfügige) Variationen bei der Messdatenerfassung klassifizieren lassen. Insbesondere soll damit erreicht werden, dass ein erfasster Messwert einem eindeutigen Datenwert zugeordnet werden kann. Durch iterative Anwendung dieser Streuungsmaßfunktion kann die Zuverlässigkeit der Zuordnung erhöht werden.

Es wird ferner darauf hingewiesen, dass die Beschreibungen mathematischer Modelle bzw. Ermittlungsmethoden auf die Behandlung von ermittelten Abmessungen und ermittelten Warengewichte anwendbar sind, außer es ist explizit für eine Anwendung auf einen ermittelten Abmessungswert oder auf ein ermitteltes Warengewicht eingeschränkt. Gleichbedeutend wird ebenfalls darauf hingewiesen, dass die gegenständlichen Verfahrensschritte sowohl für die Behandlung von Abmessungs- und Gewichtsvariationen vorgesehen sind, außer es wird explizit auf eine Option eingeschränkt.

In Abhängigkeit von der Ausbildung des Warenträgers kann die Ware im Warenträger angeordnet sein, wenn dieser beispielsweise als Behälter ausgebildet ist. Im Fall einer Ausbildung als Tablar, wird die Ware am Warenträger angeordnet sein. Es wird darauf hingewiesen, dass beide Begriffe gleichbedeutend verwendet werden und durch die Verwendung der Formulierung "in oder am Warenträger" keine Festlegung auf eine konkrete Ausbildung des Warenträgers erfolgt.

Unter den Abmessungen einer Ware werden die (äußeren) Abmessungen der Außenverpackung verstanden. Die Außenverpackung kann beispielsweise ein Karton sein. Dann sind die Abmessungen die Längen der jeweiligen Kanten. Eine Außenverpackung kann aber auch durch eine Schrumpffolie gebildet sein, welche sich der Warenkontur anpasst und somit keine gerade Außenkontur aufweist. In diesem Fall können die Abmessungen beispielsweise durch Geradeninterpolationen der Außenkontur gebildet sein. Diese Beispiele zeigen nicht abschließend mögliche Varianten wie Warenabmessungen zu verstehen sind.

Zum besseren Verständnis der Erfindung wird diese anhand der nachfolgenden Figuren näher erläutert.

Fig. 1 zeigt eine Ausführung des Systems und des gegenständlichen Verfahrens, um Variationen in den Abmessungen der Außenverpackung erfassen und behandeln zu können;

Fig. 2 zeigt eine Ausführung des Systems und des gegenständlichen Verfahrens, um Variationen in den Abmessungen der Außenverpackung erfassen und behandeln zu können;

Fig. 3 zeigt eine Darstellung von Wertebereichen wie sie mit dem gegenständlichen Verfahren gebildet und zur Festlegung von Abstandswerten bzw. Anzahlwerten verwendet werden.

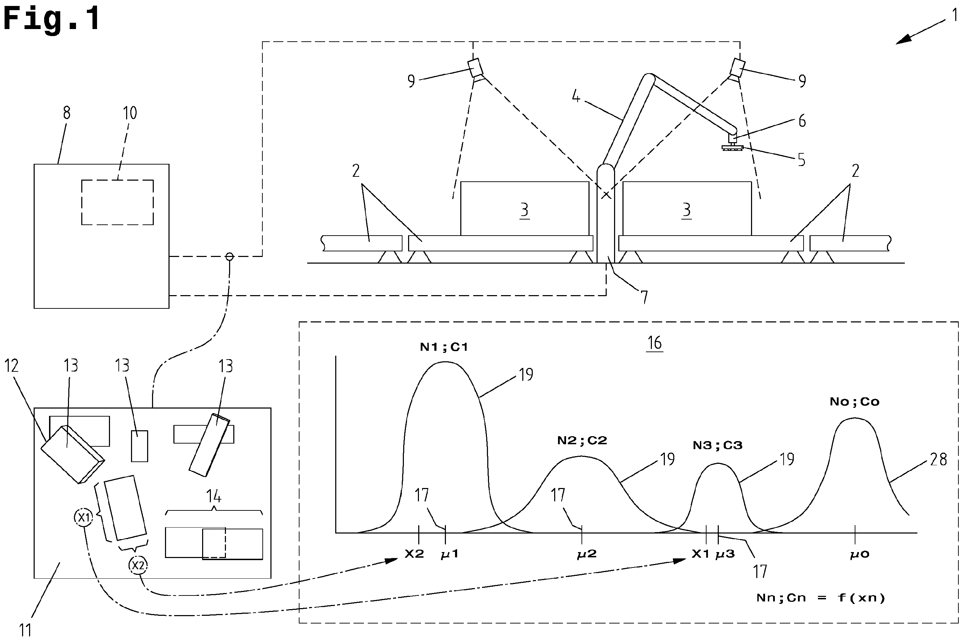

Fig. 1 zeigt eine Ausführung des gegenständlichen Verfahrens zur Verbesserung der Zuverlässigkeit einer Aufnahme und Abgabe von Ware, um Schwankungen der Abmessungen der Außenverpackung erfassen und bei der Ermittlung der Greifpose berücksichtigen zu können.

An einem automatischen Kommissionierplatz 1 werden mittels einer Fördertechnik 2, Waren in oder auf Warenträger 3 bereitgestellt - nach der Kommissionierung werden der oder die Warenträger 3 von der Fördertechnik 2 wieder abtransportiert und bevorzugt der oder die nächsten Warenträger 3 bereitgestellt.

Der Kommissionierplatz 1 bildet eine mögliche Ausgestaltung einer Arbeitsstation, welche eine Andienungsvorrichtung für einen oder mehrere Warenträger 3, einen Roboter 4 mit einem gegenüber einer Roboterbasis bewegbaren Roboterkopf mit einer Greifeinheit 5 zur Umlagerung von Waren zwischen Warenträgern 3, eine Bilderfassungseinrichtung, und eine zur Steuerung des Roboters (und gegebenenfalls der Fördertechnik) und ferner zur Auswertung von Daten der Bilderfassungseinrichtung ausgebildete Datenverarbeitungseinheit umfassen kann. Die Andienungsvorrichtung ist nach dieser Ausführung auf der Fördertechnik 2 zum An- und/oder Abtransport von Warenträgern 3 ausgebildet.

Die Bereitstellung und der Abtransport sind nicht wesentlich für das gegenständliche Verfahren, daher wird darauf nicht näher eingegangen. Die Warenträger 3 können ohne Einschränkung der konkreten Ausführung beispielsweise durch Behälter oder Tablare gebildet sein. Die Fördertechnik 2 kann ebenso ohne Einschränkung der konkreten Ausführung beispielsweise durch Rollen- oder Gurtförderer gebildet sein.

Ein Roboter 4 weist eine Greifeinheit 5 an einem Roboterkopf 6 auf, welcher Roboterkopf 6 gegenüber einer Roboterbasis 7 bewegbar ist und von einer Steuereinheit 8 in eine beliebige Greifposition innerhalb des Bewegungsspielraums des Roboters 4 bewegt werden kann. Der Bewegungsspielraum des Roboters umfasst jedenfalls den Bereich in dem die Warenträger 3 (Quelle und Ziel) angeordnet sind. Somit kann die Greifeinheit 5 jeden Bereich der Warenträger 3 erreichen, um dort Waren aufzunehmen oder abzugeben.

Zur Ermittlung der Greifpose wird in einem ersten Schritt von einem Bilderfassungssystem 9 eines opto-sensorischen Aufbereitungs- und Analysesystems 10 der Steuereinheit 8 zumindest der Quell-Ladungsträger 3 erfasst. Muss die zu kommissionierende Ware am Ziel-Ladungsträger 3 an einer bestimmten Position abgegeben werden, wird von einem weiteren Bilderfassungssystem 9 auch der Ziel-Warenträger erfasst. Das Bilderfassungssystem 9 ist bevorzugt als Stereo-Kamerasystem ausgebildet und erfasst neben einem optischen Abbild auch eine Punktwolke mit Abstandsdaten zwischen dem Kamerasystem 9 und der Oberfläche der Ware am Warenträger 3 (und der Berandung des Warenträgers 3). Das erfasste Abbild 11 sowie die ermittelte Punktwolke werden an die Steuereinheit 8 übermittelt und dort von dem opto-sensorischen Aufbereitungs- und Analysesystem 10 aufbereitet und ausgewertet.

In der Fig. 1 ist das erfasste Abbild 11 vereinfacht dargestellt, insbesondere ohne die erfasste Berandung des Warenträgers 3 und bei einem senkrechten Blick auf den Warenträger 3. Für die zu beschreibenden Verfahrensschritte ist dies aber ohne Bedeutung. Im Abbild 11 des Warenträgers 3 ist eine chaotisch angeordnete Ware 12 zu erkennen. Neben vereinzelt angeordneter Ware 12 wird es, insbesondere bei Warenträgern 3 mit höherem Befüllungsgrad stets vorkommen, dass Waren 12 auch übereinander angeordnet sind. Zur Vereinfachung ist die perspektivische Darstellung übereinander angeordneter Waren unvollständig ausgeführt.

Um die Ware 12 aufnehmen und während der Umlagerung in den Ziel-Warenträger sicher halten zu können, muss die Greifeinheit 5 die Ware 12, vereinfacht ausgedrückt, möglichst mittig in der Greiffläche 13 aufnehmen. Die Greifeinheit 5 kann beispielsweise mit Greifarmen oder bevorzugt mit zumindest einem Saugelement ausgestattet sein, wobei es für eine zuverlässige Aufnahme ferner von großer Bedeutung ist, dass der Roboter 4 die Greifeinheit 5 möglichst normal auf die Greiffläche 13 positioniert. Ein Vorteil einer möglichst mittigen Aufnahme der Ware 12 liegt darin, dass die Ware 12 dann auch zumeist in der Nähe des Schwerpunkts aufgenommen wird, was für den sicheren Halt während der Umlagerungsbewegung von Vorteil ist. Wenn die Ware 12 beispielsweise durch flexible Polybags gebildet ist, hat eine möglichst mittige Aufnahme den weiteren Vorteil, dass die Ware 12 dann zu beiden Seiten des Greifers in etwa gleich weit nach unten, in Richtung Warenträger 3 hängt. Beim Umlagern muss die Ware 12 vom Roboter 4 soweit angehoben werden, dass sie während der Schwenkbewegung vom Quell-Warenträger zum Ziel-Warenträger weder an einer ggf. vorhandenen Berandung des Warenträgers 3, noch an Elementen des Kommissionierplatzes 1 anstößt.

Mittels eines Kantenerkennungsverfahren des opto-sensorischen Aufbereitungs- und Analysesystems 10 werden im erfassten Abbild 11 des Warenträgers 3 Warengrenzen gesucht, was beispielsweise mittels eines Kontrast-Detektionsverfahrens möglich ist. Es kann nun beispielsweise vorkommen, dass Ware 12 zufällig derart angeordnet ist, dass eine vermeintlich durchgehende Kante entsteht. Vom Kontrast-Detektionsverfahren würde dann beispielsweise die gesamte Länge 14 als Abmessung erkannt werden und darauf basierend eine falsche Greifpose berechnet, mit der Konsequenz, dass mit großer Wahrscheinlichkeit die Ware 12 nicht aufgenommen werden kann oder sich während der Umlagerung von der Greifeinheit 5 lösen wird. In Fig. 1 ist eine vereinfachte Situation dargestellt, wo lediglich zwei Waren 12 knapp beieinander bzw. übereinanderliegen. Ferner wurde für diese Beschreibung die Möglichkeit zur Abgrenzung, basierend auf den vom Bilderfassungssystem 9 ermittelten Abstandsdaten, nicht berücksichtigt. In einem realen, chaotisch befüllten Warenträger 3 wird eine Mehrzahl von Waren 12 dicht aneinander und übereinander angeordnet sein und auch über die Abstandsdaten nicht zuverlässig unterscheidbar sein (speziell bei sehr flachen Polybags), sodass die Wahrscheinlichkeit für die Erkennung einer unzulässigen Kantenlänge und damit die Ermittlung einer ungültigen Greifpose steigen wird. Letztendlich wird durch solche Fehlerkennungen die Kommissionierleistung deutlich sinken bzw. die Fehlerhäufigkeit steigen.

Die Sicherheit der Erkennung eines einzelnen Warenstücks wird gemäß dem gegenständlichen Verfahren dadurch erhöht, dass die ermittelten Abmessungen mit Waren-Stammdaten verglichen werden, die im Waren-Eingangsprozess erfasst wurden. Wie bereits beschrieben, können diese Abmessungen aber schwanken. Zur Erfassung einer gültigen Greifpose - um eine einzige Ware 12 zuverlässig greifen zu können - muss nun eine ermittelte Abmessung mit hinterlegten Abmessungsbereichen abgeglichen werden, also eine Zuordnung der hinterlegten Abmessungswerten zu den ermittelten Abmessungen erfolgen. Solange die einzelnen Dimensionen der Außenabmessung eindeutig unterschiedlich sind, wird ein Vergleich mit den Waren-Stammdaten durchaus gute Ergebnisse liefern. Temporäre Änderungen der Außenverpackung durch den Hersteller, bei gleicher Warennummer, können mit einem rein auf Waren-Stammdaten basierenden Verfahren nicht erfasst werden und Kommissionierfehler sind die Folge.

Mit dem gegenständlichen Verfahren werden die im Abbild 11 ermittelten Abmessungen mit einer adaptiv angepassten Werteverteilung 16 verglichen, um dadurch Schwankungen der Abmessungen kompensieren zu können. Messwerte die zufälligen Schwankungen unterliegen, werden meist eine Normalverteilung der Werte haben. Ein prinzipiell quaderförmiges Warenstück hat drei Abmessungskoordinaten, wobei die überwiegende Anzahl der erfassten Abmessungswerte jeweils um einen der drei Abmessungs-Normierungswerte 17 verteilt sein werden. Details zu den Eigenschaften von Normalverteilungen werden hierin nicht weiter ausgeführt, da diese einem Fachmann bekannt sind. Da eine Normalverteilung eine mögliche Verteilungsfunktion beschreibt, werden im Weiteren die allgemeinen Begriffe Normierungswert und Verteilungskurve verwendet, wobei der Normierungswert im Spezialfall einer Normalverteilung dem Mittelwert entspricht.

Vom Kantenerkennungsverfahren des opto-sensorischen Aufbereitungs- und Analysesystems 10 wurden beispielsweise für eine Ware 12 der Umriss erkannt und daraus zwei Abmessungswerte X1, X2 ermittelt. Um zu ermitteln, um welche der drei möglichen Abmessungen der Außenverpackung es sich beim ermittelten Abmessungswert X1 handelt, wird der ermittelte Wert X1 auf die Werteverteilung 16 projiziert. Zu erkennen ist, dass der ermittelte Wert X1 in der Nähe vom Normierungswert $\mu3$, 17 und innerhalb der zu diesem Normierungswert 17 gehörenden Verteilungskurve 19 liegt. Gemäß dem gegenständlichen Verfahren gibt es zu jeder Verteilungskurve 19 einen Konfidenzwert C, der eine Maßzahl darstellt, wie gut der Normierungswert 17 durch die Verteilungskurve 19 gestützt ist. Eine detailliertere Beschreibung folgt weiter unten im Text. Da der ermittelte Abmessungswert X1 nahe dem Normierungswert $\mu3$ liegt und der Konfidenzwert C3 für diese Verteilungskurve N3 hoch ist, wird der Abmessungswert gleich dem Normierungswert $\mu3$ gesetzt.

Sobald der Konfidenzwert C über einem festlegbaren Schwellwert liegt, wird gemäß dem gegenständlichen Verfahren der ermittelte Normierungswert als Abmessungswert gewählt, unterhalb dieser Schwelle wird der Abmessungswert aus den Waren-Stammdaten gewählt. Da das gegenständliche Verfahren bei jeder Ermittlung von Abmessungswerten jeweils den Normierungswert und den Konfidenzwert adaptiert, wird unter der Annahme geringfügig streuender Messwerte, mit zunehmender Ausführungshäufigkeit die Sicherheit zunehmen, die korrekten Abmessungswerte ermittelt zu haben. Da die Waren-Stammdaten nicht aktualisiert werden, wird sich eine Abweichung zwischen den Waren-Stammdaten und den Normierungswerten ergeben, wenn wie beispielsweise bereits beschrieben, eine Außenverpackung geändert wird. Aufgrund eines ggf. hohen Konfidenzwerts werden in diesem Fall aber die mit dem gegenständlichen Verfahren ermittelten Werte verwendet und dadurch trotz unterschiedlicher Warenverpackung die Greifflächengröße und die Greifpose richtig ermittelt.

Neben den drei Abmessungsbereichen $\mu1$-$\mu3$ ist noch ein vierter Bereich $\mu0$ mit einer Verteilungskurve 28 dargestellt. Werte die in diesen Bereich fallen lassen sich keiner realen Abmessung einer Ware zuordnen, da sie nur von einem Erfassungsfehler, oder einer sich irrtümlich im/am Warenträger befindlichen unzulässigen Ware stammen können. In diesem Fall ist in einer Sonderbehandlung bevorzugt der Bildverarbeitungsschritt erneut auszuführen. Treten solche fehlerhaften Erfassungen gehäuft auf, könnte daraus beispielsweise eine Information abgeleitet werden, dass Waren dieses Typs ggf. anders im Warenträger angeordnet werden sollten, um Erfassungsfehler zu verhindern.

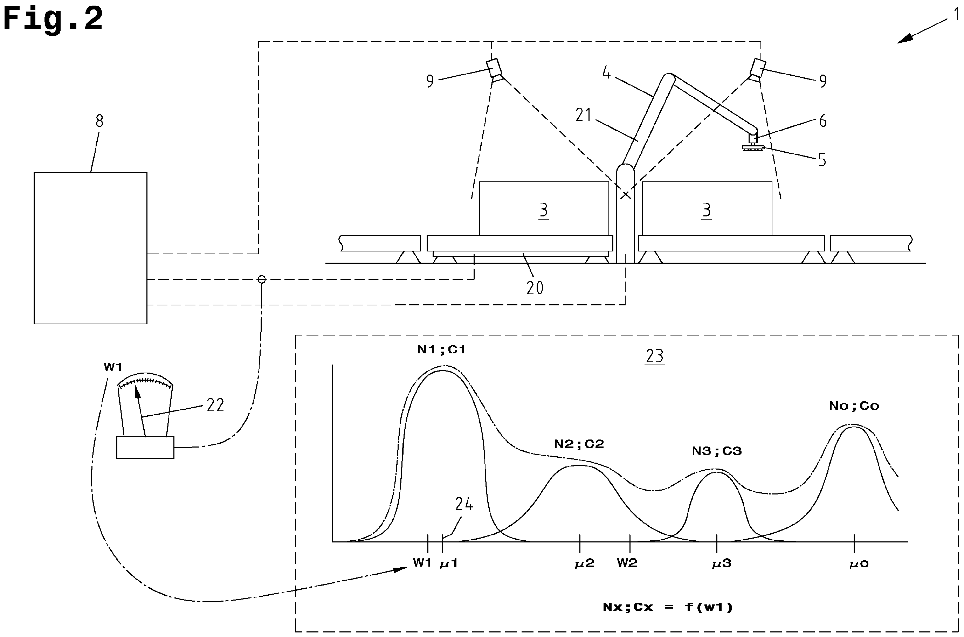

Zur zuverlässigen Abarbeitung eines Auftrags ist es neben einer zuverlässigen Aufnahme und Abgabe von Ware 12 ferner erforderlich, dass die korrekte Anzahl an Waren 12 umgelagert wird. Gemäß einer in Fig. 2 dargestellten weiteren Ausführung des gegenständlichen Verfahrens, wird das Gewicht der von der Greifeinheit 5 aufgenommenen Ware 12 zur Bestimmung der aufgenommenen Warenanzahl ausgewertet.

Der Kommissionierplatz 1 unterscheidet sich von dem in Fig. 1 beschriebenen Kommissionierplatz im Wesentlichen dadurch, dass im Bereich des Quell-Warenträgers eine Wiegevorrichtung 20 angeordnet ist. Die Wiegevorrichtung 20 kann auch im Bereich des Ziel-Warenträgers oder auch am Roboterkopf 6 angeordnet sein. Die Anordnung im Bereich des Quell-Warenträgers hat den Vorteil, dass eine Ermittlung der aufgenommenen Warenzahl unmittelbar nach der Warenaufnahme erfolgen kann, insbesondere bevor sich der Roboterarm 21 in Richtung des Ziel-Warenträgers bewegt. Dadurch wird eine sehr frühe Korrektur einer Fehlaufnahme möglich, beispielweise wenn mehr Warenstücke aufgenommen werden, als für die Erfüllung des Auftrags erforderlich sind. Eine Aufnahme mehrerer Waren 12 ist jedoch zulässig, solange dadurch die Gesamtanzahl der zu kommissionierenden Waren 12 nicht überschritten wird.

Aufgrund einer für die Bildanalyse schwierigen Oberfläche (beispielweise glänzend und/oder starke Kontraste) kann es vorkommen, dass die Greifpose nicht optimal ermittelt wurde und die Greifeinheit 5 beispielweise knapp am Rand der Ware 12 positioniert wird. Bei der Warenaufnahme kann es daher passieren, dass mehrere Waren 12 aufgenommen werden. Die Gewichtsänderung des Quell-Warenträgers wird von der Wiegevorrichtung 20 erfasst und mit dem gegenständlichen Verfahren ausgewertet, um die zuverlässige Anzahl der aufgenommenen Waren 12 zu ermitteln.

Ebenso wie die Außenabmessungen, kann auch das Warengewicht geringfügigen Schwankungen unterliegen, oder wie für die Außenverpackung bereits beschrieben, durch den Hersteller temporär geändert werden. Die grundlegende Problematik ist also äquivalent zur Situation bei der Ermittlung der Außenabmessung zur Ermittlung der Greifflächengröße bzw. Greifflächenpose, sodass diese Beschreibung hier nicht wiederholt wird.

Wie auch für die Abmessungen, wird die von der Wiegevorrichtung 20 erfasste Gewichtsänderung W1, 22 auf die Werteverteilung 23 projiziert. Zu erkennen ist, dass der ermittelte Wert W1 in der Nähe des Normierungswerts $\mu 1$, 24 liegt und das Gewicht des aufgenommenen Warenstücks etwas geringer ist als der Normierungswert $\mu 1$, 24. In diesem Fall kann, bei einem Konfidenzwert über dem Schwellwert vorausgesetzt, zuverlässig festgelegt werden, dass genau ein Warenstück aufgenommen wurde, der Anzahlwert kann daher mit eins festgelegt werden.

Beispielsweise kann von der Wiegevorrichtung 20 ein anderes Gewicht erfasst werden, dass nach Projektion auf die Werteverteilung 23 im Bereich zwischen den Normierungswerten $\mu 2$ und $\mu 3$ bzw. über dem Normierungswert $\mu 2$ liegt. Wiederum in Abhängigkeit vom Konfidenzwert wird in diesem Fall der Anzahlwert mit zwei festgelegt. Wenn gemäß dem Auftrag noch zumindest zwei Waren umzulagern sind, wird die Steuereinheit 8 den Roboterkopf 6 zum Ziel-Warenträger bewegen und die Ware dort ablegen. Wenn jedoch nur noch ein Warenstück zu kommissionieren ist, wird die Steuerung 8 die Greifeinheit 5 ansteuern, die aufgenommene Ware zurück in den Quell-Warenträger zu geben. Gegebenenfalls kann vorgesehen sein, dass die Ware nicht am Platz der Aufnahme abgegeben wird, sondern etwas versetzt davon, um für die nächste Ermittlung der Greifpose eine veränderte und evtl. günstigere Ausgangsposition zu schaffen.

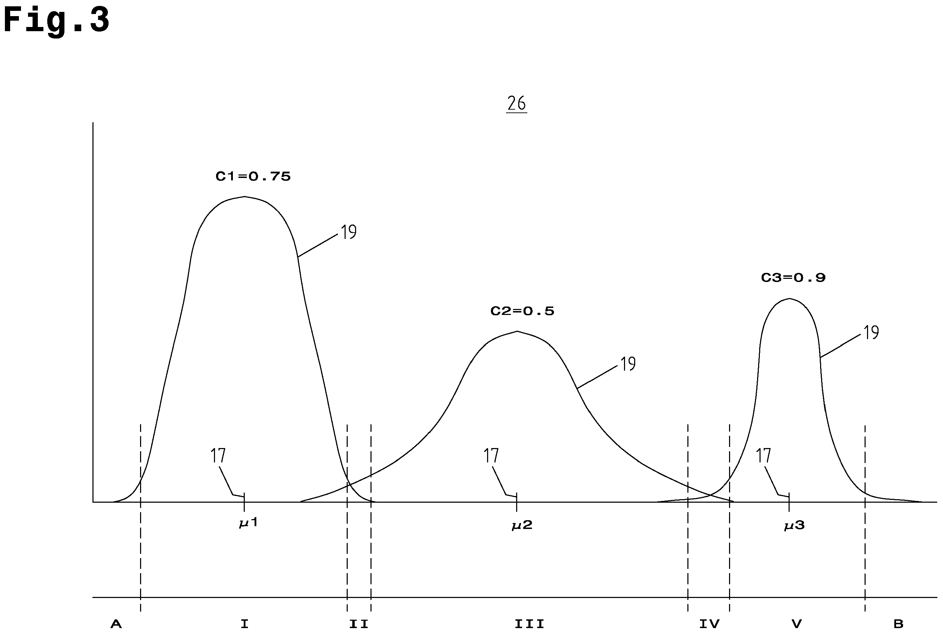

Fig. 3 zeigt eine Darstellung, wie ein ermittelter Wert (eine Abmessung oder ein Gewicht) auf die Werteverteilung projiziert und darüber der Abmessungswert oder der Anzahlwert ermittelt wird. Da dieses Klassifikations- und Zuordnungsverfahren für Abmessungen und Warengewicht prinzipiell gleich abläuft, ist die folgende Beschreibung für beide Parameter zu verstehen.

Fig. 3 zeigt eine Werteverteilung 26 mit drei Verteilungskurven 19, welche jeweils die Verteilung erfasster Messwerte um einen Normierungswert 17 beschreiben. Diese Werteverteilung 26 entsteht adaptiv nach mehreren Durchläufen des gegenständlichen Verfahrens, da im Aufbereitungsschritt jeweils für den erfassten Messwert eine Streuungsmaßfunktion angewendet wird und daraus Normierungswerte und Konfidenzwerte ermittelt werden. Beim ersten Durchlauf des gegenständlichen Verfahren wird die Werteverteilung 26 nicht existieren, erst mit mehrmaligem Durchlauf, und damit einem mehrmaligen Anwenden der Streuungsmaßfunktion auf die erfassten Messwerte, werden sich (stabile) Normierungswerte 17 und Verteilungskurven 19 ausbilden. Insbesondere werden mit zunehmender Anzahl an Adaptierungsdurchläufen auch die Konfidenzwerte der einzelnen Normierungswerte 17 steigen. Es ist jedoch nicht zwangsläufig so, dass alle Konfidenzwerte steigen müssen. Beispielsweise kann ein Messwert trotz einer größeren Anzahl an Aufbereitungsschritten stark streuen, daher wird sich eine breite Verteilungskurve 19 einstellen und der Konfidenzwert wird daher gering sein.

Nach mehreren Durchläufen des gegenständlichen Verfahrens wird sich eine beispielhaft dargestellte Werteverteilung 26 einstellen.

Nach der Ermittlung einer Abmessung bzw. nach der Ermittlung eines Warengewichts (allgemein eines Messwerts) wird vom gegenständlichen Verfahren die Abmessung bzw. das Warengewicht mit Bereichen der Werteverteilung verglichen. Insbesondere wird der Messwert auf die Wertebereiche projiziert und eine Bereichs-Zuordnung ermittelt. In der Werteverteilung 26 in Fig. 3 sind mehrere Wertebereiche dargestellt, die durch die adaptive Ausführung des gegenständlichen Verfahrens ermittelt werden.

Um jeden Normierungswert 17 gibt es jeweils einen Bereich (I, III, V), wo eine eindeutige Zuordnung des Messwerts zu einem Normierungswert 17 möglich ist. Wenn dann auch der Konfidenzwert über einer festlegbaren Schwelle liegt, kann der Normierungswert dem Abmessungswert bzw. dem Anzahlwert zugewiesen werden.

Zwischen den einzelnen Verteilungskurven 19 gibt es Übergangs- bzw. Überlappungsbereiche (II, IV) in denen eine eindeutige Zuordnung eines Abstandswerts bzw. eines Anzahlwerts nicht möglich ist. Liegt der Messwert in einem dieser Bereiche, ist nach dem gegenständlichen Verfahren vorgesehen, dass eine Sonderbehandlung ausgeführt wird. Als Sonderbehandlung kann beispielsweise vorgesehen sein, dass die beiden angrenzenden Verteilungsfunktionen analysiert werden und insbesondere anhand der beiden Konfidenzwerte entschieden wird, welcher der beiden Normierungswerte 17 gewählt wird. In die Ermittlung des Konfidenzwerts fließen - vereinfacht dargestellt - die Streuung und die Anzahl der Messwerte ein, sodass zumeist der Normierungswert mit dem höheren Konfidenzwert gewählt wird. Dies resultiert auch in der unsymmetrischen Lage der Übergangsbereiche. Ohne Berücksichtigung des Konfidenzwerts würde die Zuordnungsgrenze genau beim Schnittpunkt der beiden Verteilungskurven 19 liegen bzw. würde ein allfälliger Übergangsbereich deutlich breiter sein. Durch das vorteilhafte Verfahren kann nun sowohl die Lage, also als die Breite des Übergangsbereichs zugunsten der Verteilungskurve 19 mit dem höheren Konfidenzwert verschoben werden. Führte eine zurückliegende Zuordnung eines Normierungswerts zu einem Messwert in weiterer Folge zu einem Kommissionierfehler, kann in der Sonderbehandlung auch die Historie der zurückliegenden Zuordnungen berücksichtigt werden, um dadurch die Entscheidungsqualität zu erhöhen.

In der Fig. 3 sind auch noch zwei Randbereiche (A, B) dargestellt, für die ebenfalls eine Fehlerbehandlung durchgeführt werden muss, falls ein Messwert diesem Bereich zugeordnet wird. Im Wesentlichen repräsentieren diese Bereiche fehlerhaft erfasste Messwerte. Die Sonderbehandlung für diese Fälle besteht zumeist darin, dass die Bilderfassung erneut durchgeführt bzw. die Ware von der Greifeinheit zurück auf den Warenträger abgegeben wird. Ein Messwert in einem dieser Bereiche kann auch bedeuten, dass sich eine nicht vorgesehene Ware am Warenträger befindet. In der Sonderbehandlung kann ein übergeordnetes Lager-Verwaltungssystem alarmiert und der Warenträger mittels der Fördertechnik zu einem manuellen Arbeitsplatz transportiert werden.

Die beispielsweise in den Fig. 1 und 2 dargestellte Anordnung der Warenträger 3 in Bezug zum Roboter 4 ist nur beispielhaft zu verstehen und wurde insbesondere aus Darstellungsgründen derart gewählt. Es sind jedenfalls auch andere Konfigurationen möglich.

Abschließend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

Der Ordnung halber sei abschließend darauf hingewiesen, dass zum besseren Verständnis der Verfahrensschritte, Zeichnungselemente teilweise unmaßstäblich und/oder vergrößert und/oder verkleinert dargestellt wurden.

Bezugszeichenaufstellung

| 1 | Kommissionierplatz |
|---|---|
| 2 | Fördertechnik |
| 3 | Warenträger |
| 4 | Roboter |
| 5 | Greifeinheit |
| 6 | Roboterkopf |
| 7 | Roboterbasis |
| 8 | Steuereinheit |
| 9 | Bilderfassungssystem |
| 10 | opto-sensorischen Aufbereitungs- und Analysesystem |
| 11 | Abbild |
| 12 | Ware |
| 13 | Greiffläche |
| 14 | Länge |
| 16 | Werteverteilung für Abmessungen |
| 17 | Normierungswert |
| 19 | Verteilungskurve |
| 20 | Wiegevorrichtung |
| 21 | Roboterarm |
| 22 | Gewicht |
| 23 | Werteverteilung für Warengewicht |
| 24 | Normierungswert |
| 26 | Werteverteilung |
| 28 | Verteilungskurve |

**Patentansprüche**

1. Optimierungsverfahren zur Verbesserung der Zuverlässigkeit einer Aufnahme und Abgabe von Waren (12) entsprechend eines Auftrags in einem Kommissionierverfahren mit einem Roboter (4), welcher Roboter (4) einen gegenüber einer Roboterbasis (7) bewegbaren Roboterkopf (6) mit einer Greifeinheit (5) aufweist, bei dem eine Ware (12) mit der Greifeinheit (5) von oder aus einem ersten Warenträger (3) aufgenommen und in oder auf einen zweiten Warenträger (3) abgelegt oder abgeworfen wird,

wobei in einem Bildverarbeitungsschritt mittels eines opto-sensorischen Aufbereitungs- und Analysesystems (10) eine Greifflächengröße und eine Greifflächenpose ermittelt wird und daraus eine Greifpose für die Greifeinheit (5) berechnet, die Greifeinheit (5) in die berechnete Greifpose bewegt und die Ware (12) von der Greifeinheit (5) aufgenommen wird, **dadurch gekennzeichnet, dass** im Bildverarbeitungsschritt

• bei der Ermittlung der Greifflächengröße zumindest eine Abmessung ermittelt wird, wobei die zumindest eine Abmessung dadurch ermittelt wird, indem von einem mit dem opto-sensorischen Aufbereitungs- und Analysesystem (10) verbundenen, optischen Bilderfassungsmittel ein Abbild (11) der Waren (12) im oder am ersten Warenträger (3) erstellt wird, und
• durch einen Vergleich dieser Abmessung mit Abmessungsbereichen eine Bereichs-Zuordnung ermittelt wird, wobei die Abmessungsbereiche in einem Waren-Kenndatenfeld hinterlegt sind, und
• für diese Bereichs-Zuordnung ein Abmessungswert ermittelt und der ermittelten Abmessung zugeordnet wird, wobei in Abhängigkeit eines Konfidenzwerts des Abmessungsbereichs der Abmessungswert gewählt wird, wobei sobald der Konfidenzwert über einem festlegbaren Schwellwert liegt, wird ein Normierungswert (17, 24) als Abmessungswert gewählt, unterhalb dieser Schwelle wird der Abmessungswert aus Waren-Stammdaten gewählt, wobei der Normierungswert (17, 24) und der Konfidenzwert des Abmessungsbereichs im Waren-Kenndatenfeld hinterlegt sind, und dass

in einem Aufbereitungsschritt

• bei jeder Ermittlung von Abmessungswerten für die ermittelte Abmessung und für die Abmessungsbereiche eine mathematische Streuungsmaßfunktion angewendet wird und daraus die Normierungswerte (17, 24) und Konfidenzwerte der Abmessungsbereiche adaptiert werden.

2. Optimierungsverfahren nach Anspruch 1, **dadurch gekennzeichnet,**

**dass** in einem der Aufnahme der Ware (12) durch die Greifeinheit (5) nachgelagerten Zählschritt die Anzahl der aufgenommenen Waren (12) ermittelt wird, indem

• von einer Wiegevorrichtung (20) ein Warengewicht ermittelt wird, und
• das Warengewicht mit Gewichtsbereichen, welche im Kenndatenfeld hinterlegt sind, verglichen und eine Bereichs-Zuordnung ermittelt wird, und
• für diese Bereichs-Zuordnung ein Anzahlwert ermittelt wird, wobei in Abhängigkeit eines Konfidenzwerts des Gewichtsbereichs aus hinterlegten Waren-Stammdaten ermittelt oder aus einem Normierungswert (24) des Gewichtsbereichs ermittelt wird,

wobei der Normierungswert und der Konfidenzwert des Gewichtsbereichs im Waren-Kenndatenfeld hinterlegt sind, und **dass**

im Aufbereitungsschritt

• für das Warengewicht und für die Gewichtsbereiche eine mathematische Streuungsmaßfunktion angewendet wird und daraus Normierungswerte (24) und Konfidenzwerte der Gewichtsbereiche ermittelt werden.

3. Optimierungsverfahren nach Anspruch 2, **dadurch gekennzeichnet,**
**dass** alternativ zum Vergleich des ermittelten Warengewichts mit Gewichtsbereichen

• aus dem von der Wiegevorrichtung ermittelten Warengewicht und einem Normierungswert (24) des Gewichts ein Quotient gebildet wird, und
• der Quotient skaliert und mit Gewichtsbereichen verglichen wird, und dass
• eine Bereichs-Zuordnung ermittelt wird.

4. Optimierungsverfahren nach Anspruch 2 oder 3, **dadurch gekennzeichnet, dass** die Wiegevorrichtung (20) vom Roboter (4), insbesondere der Greifeinheit (5), getrennt angeordnet ist und das Gewicht des ersten Warenträgers (3) erfasst und der Zählschritt vor Abgabe der Ware (12) erfolgt, insbesondere nach Aufnahme der Ware (12) aus dem ersten Warenträger (3) und bevor die Greifeinheit (5) den zweiten Warenträger (3) erreicht.

5. Optimierungsverfahren nach einem der Ansprüche 2 bis 4, **dadurch gekennzeichnet, dass** im Fall eines ermittelten Anzahlwerts größer als eins, eine Prüfung erfolgt, ob der ermittelte Anzahlwert die Sollmenge der zu kommissionierenden Ware (12) überschreitet, wobei die Sollmenge im Auftrag hinterlegt ist und bei Überschreitung ein Sonderbehandlungsschritt durchgeführt wird.

6. Optimierungsverfahren nach einem der Ansprüche 2 bis 4, **dadurch gekennzeichnet, dass** im Fall einer Überschreitung eines Grenzwerts des Anzahlwerts oder bei Überschreiten eines Bereichs-Grenzwerts bei der Ermittlung der Bereichs-Zuordnung ein Sonderbehandlungsschritt durchgeführt wird.

7. Optimierungsverfahren nach einem der Ansprüche 2 bis 6, **dadurch gekennzeichnet, dass** der Normierungswert (24) des Gewichts mittels einer mathematischen Gewichtungsfunktion aus allen Normierungswerten (24) der Gewichtsbereiche gebildet wird.

8. Optimierungsverfahren nach einem der Ansprüche 3 bis 7, **dadurch gekennzeichnet, dass** für den Nachkommawert des Quotienten eine Bereichsklassifikation durchgeführt wird, wobei für einen ersten Bereich der Anzahlwert durch den Ganzzahlanteil des Quotienten festgelegt wird und für einen zweiten Bereich eine Sonderbehandlung durchgeführt wird.

9. Optimierungsverfahren nach Anspruch 8, **dadurch gekennzeichnet, dass** für einen dritten Bereich die Konfidenzwerte der beiden angrenzenden Gewichtsbereiche analysiert werden und das Warengewicht aus dem Normierungswert (24) des Gewichtsbereichs mit dem höheren Konfidenzwert ermittelt wird.

10. Optimierungsverfahren nach einem der Ansprüche 1 bis 9, **dadurch gekennzeichnet, dass** für die ermittelte Abmessung bei der Ermittlung der Bereichs-Zuordnung eine Prüfung durchgeführt wird, ob sich die ermittelte Abmessung in einem Überlappungsbereich zweier Abmessungsbereiche befindet, und im Fall einer positiven Prüfung ein Sonderbehandlungsschritt durchgeführt wird.

11. Optimierungsverfahren nach Anspruch 10, **dadurch gekennzeichnet, dass** bei einer ermittelten Lage der Abmessung im Überlappungsbereich ein Sonderbehandlungsschritt der Bildverarbeitungsschritt erneut durchgeführt wird.

12. Optimierungsverfahren nach Anspruch 10 oder 11, **dadurch gekennzeichnet, dass** im Sonderbehandlungsschritt der Roboter (4) angesteuert wird den Roboterkopf (6) zum ersten Warenträger (3) zu bewegen, eine Ware (12) aufzunehmen und wieder abzulegen und dass anschließend die Bildverarbeitung erneut durchgeführt wird.

13. Optimierungsverfahren nach einem der Ansprüche 5 bis 12, **dadurch gekennzeichnet, dass** im Sonderbehandlungsschritt der Roboter (4) angesteuert wird den Roboterkopf (6) zum ersten Warenträger (3) zu bewegen und die aufgenommene Ware (12) am oder im ersten Warenträger (3) abzulegen oder abzuwerfen.

14. Optimierungsverfahren nach einem der Ansprüche 1 bis 13, **dadurch gekennzeichnet, dass** im Aufbereitungsschritt, für den zugeordneten Bereich, der Normierungswert (17, 24) als Mittelwert einer Normalverteilung festgelegt wird.

15. Optimierungsverfahren nach einem der Ansprüche 1 bis 14, **dadurch gekennzeichnet, dass** die Streuungsmaßfunktion einen Expectation-Maximation Algorithmus umfasst und dass ermittelte Werte, Abmessungen bzw. Gewichtswerte, iterativ zu lokalen Häufungen zusammengefasst werden.

16. Optimierungsverfahren nach Anspruch 15, **dadurch gekennzeichnet, dass** auf die zusammengefassten Werte eine Wahrscheinlichkeitsverteilung angewendet wird, insbesondere eine Normalverteilung, und dass für lokale Häufungen ein Mittelwert und eine Mittelwertstreuung ermittelt und der Mittelwert als Normierungswert (17, 24) festgelegt wird.

17. Optimierungsverfahren nach einem der Ansprüche 1 bis 15, **dadurch gekennzeichnet, dass** die Streuungsmaßfunktion eine Summe gewichteter Normalverteilungen (Mixture of Gaussians) umfasst und ermittelte Werte, Abmessungen bzw. Gewichtswerte, iterativ zu lokalen Häufungen zusammengefasst werden.

18. Optimierungsverfahren nach einem der Ansprüche 1 oder 3 bis 17, oder einem der Ansprüche 2 bis 17, **dadurch gekennzeichnet, dass** in einem Adaptierungsschritt die Abmessungsbereiche an die im Aufbereitungsschritt ermittelten Normierungswerte (17) angepasst werden, oder dass im Adaptierungsschritt die Gewichtsbereiche an die im Aufbereitungsschritt ermittelten Normierungswerte (24) angepasst werden.

19. Optimierungsverfahren nach einem der Ansprüche 1 bis 18, **dadurch gekennzeichnet, dass** für jeden Abmessungsbereich und/oder jeden Gewichtsbereich der Konfidenzwert aus einer Streuung des Normierungswerts (17, 24) ermittelt wird, und/oder dass der Konfidenzwert aus der Anzahl der durchgeführten Aufbereitungsschritte ermittelt wird.

20. Optimierungsverfahren nach einem der Ansprüche 1 bis 19, **dadurch gekennzeichnet, dass** bei der Bildung des Normierungs- und Konfidenzwerts eine Fensterfunktion jeweils auf die ermittelten Abmessungen und Warengewichte angewendet wird.

21. Optimierungsverfahren nach einem der Ansprüche 1 bis 20, **dadurch gekennzeichnet, dass** die Waren-Stammdaten von einem übergeordneten Lagerverwaltungssystem an das Aufbereitungs- und Analysesystem (10) übermittelt und in diesem in einem Speichermittel abgelegt werden.

22. Optimierungsverfahren nach einem der Ansprüche 1 bis 21, **dadurch gekennzeichnet, dass** bei fehlenden Waren-Stammdaten eine Folge von Warenumlagerungen zwischen dem ersten und zweiten Warenträger (3) durchgeführt und aus den jeweils ermittelten Abmessungen bzw. Warengewichten das Waren-Kenndatenfeld mit Normierungswerten (17, 24) und Konfidenzwerten für Abmessungen und/oder Warengewichte aufgebaut wird.

23. Optimierungsverfahren nach Anspruch 22, **dadurch gekennzeichnet, dass** aus einer Folge von Normierungs- oder Konfidenzwerten der Abmessungen und/oder der Warengewichte, eine Schwankungsbreite ermittelt wird, und die Warenumlagerungen bei Unterschreiten einer Schwelle der Schwankungsbreite beendet wird.

24. Optimierungsverfahren nach einem der Ansprüche 1 bis 23, **dadurch gekennzeichnet, dass** bei einem hohen Konfidenzwert für einen Abmessungs-Normierungswert (17) oder für einen Gewichts-Normierungswert (24) eine automatisierte oder teilautomatisierte Aktualisierung der Waren-Stammdaten durchgeführt wird.

25. Arbeitsstation, insbesondere Kommissionierstation, umfassend

- eine Andienungsvorrichtung für einen oder mehrere Warenträger (3),
- einen Roboter (4) mit einem gegenüber einer Roboterbasis (7) bewegbaren Roboterkopf (6) mit einer Greifeinheit (5) zur Umlagerung von Waren (12) zwischen Warenträgern (3),
- eine Bilderfassungseinrichtung, und
- eine zur Steuerung des Roboters (4) und ferner zur Auswertung von Daten der Bilderfassungseinrichtung ausgebildete Datenverarbeitungseinheit,

**dadurch gekennzeichnet, dass**
die Datenverarbeitungseinheit zur Durchführung eines Verfahrens nach einem der Ansprüche 1 bis 24 ausgebildet ist.

**Claims**

1. An optimization method for improving the reliability of a pickup and discharge of articles (12) according to an order in a picking process with a robot (4), which robot (4) comprises a robot head (6) which has a gripping unit (5) and is movable relative to a robot base (7), in which an article (12) is picked up from or out of a first article carrier (3) and is placed down or dropped in/into or on/onto a second article carrier (3) by means of the gripping unit (5), and

wherein, in an image processing step, a gripping surface size and a gripping surface pose are determined by means of an opto-sensory preparation and analysis system (10), and a gripping pose for the gripping unit (5) is calculated therefrom, the gripping unit (5) is moved to the calculated gripping pose and the article (12) is picked up by the gripping unit (5),
**characterized in that**, in the image processing step,

• at least one dimension is determined when the gripping surface size is determined, wherein the at least one dimension is determined **in that** an image (11) of the articles (12) in or on the first article carrier (3) is produced by an optical image capturing means connected to the opto-sensory preparation and analysis system (10), and
• a range allocation is determined by comparing this dimension with dimension ranges, wherein the dimension ranges are stored in an article parameter field, and
• for this range allocation, a dimension value is determined and allocated to the determined dimension, wherein the dimension value is selected depending on a confidence value of the dimension range, wherein as soon as the confidence value is above a determinable threshold value, a normalization value (17, 24) is selected as the dimension value while below said threshold, the dimension value is selected from the article reference data,

wherein the normalization value (17, 24) and the confidence value of the dimension range are stored in the article parameter field, and that
in a preparation step,

• in each determination of dimension values, a mathematical scattering measure function is applied for the determined dimension and for the dimension ranges, and normalization values (17, 24) and confidence values of the dimension ranges are adapted therefrom.

2. The optimization method according to claim 1, **characterized in that**, in a counting step following the pickup of the article (12) by the gripping unit (5), the number of picked-up articles (12) is determined by

• determining an article weight by means of a weighing device (20), and
• comparing the article weight having weight ranges, which are stored in the parameter field, and determining a range allocation, and
• determining a number value for this range allocation, wherein it is determined from stored article reference data or determined from a normalization value (24) of the weight range, depending on a confidence value of the weight range,

wherein the normalization value and the confidence value of the weight range are stored in the article parameter field, and that, in the preparation step,

• a mathematical scattering measure function is applied for the article weight and for the weight ranges, and normalization values (24) and confidence values of the weight ranges are determined therefrom.

3. The optimization method according to claim 2, **characterized in that** alternatively to comparing the determined article weight to weight ranges,

• a quotient is formed from the article weight determined by the weighing device and a normalization value (24) of the weight, and
• the quotient is scaled and compared with weight ranges, and that
• a range allocation is determined.

4. The optimization method according to claim 2 or 3, **characterized in that** the weighing device (20) is arranged separately from the robot (4), in particular from the gripping unit (5), and acquires the weight of the first article carrier (3), and the counting step is carried out before discharge of the articles (12), in particular after pickup of the articles (12) from the first article carrier (3) and before the gripping unit (5) reaches the second article carrier (3).

5. The optimization method according to one of claims 2 to 4, **characterized in that**, in case of a determined number value which is greater than one, an examination is carried out as to whether the determined number value exceeds the target quantity of articles (12) to be picked, wherein the target quantity is stored in the order and in case of exceedance a special handling step is performed.

6. The optimization method according to one of claims 2 to 4, **characterized in that**, in case of exceeding a limit value of the number value, or in case of exceeding a range limit value during the determination of the range allocation, a special handling step is performed.

7. The optimization method according to one of claims 2 to 6, **characterized in that** the normalization value (24) of the weight is formed by means of a mathematical weighting function from all normalization values (24) of the weight ranges.

8. The optimization method according to one of claims 3 to 7, **characterized in that** a range classification is performed for the decimal value of the quotient, wherein for a first range, the number value is determined by the integer part of the quotient, and for a second range, a special handling is performed.

9. The optimization method according to claim 8, **characterized in that** for a third range, the confidence values of the two adjoining weight ranges are analyzed, and the article weight is determined from the normalization value (24) of the weight range with the higher confidence value.

10. The optimization method according to one of claims 1 to 9, **characterized in that** during the determination of the range allocation, a check is carried out for the determined dimension value, as to whether the determined dimension is in an overlap region of two dimension ranges, and in the case of a positive check, a special handling step is performed.

11. The optimization method according to claim 10, **characterized in that** in case of a determined position of the dimension in the overlap region, a special handling step the image processing step is carried out again.

12. The optimization method according to claim 10 or 11, **characterized in that** in the special handling step, the robot (4) is controlled to move the robot head (6) to the first article carrier (3), to pick up an article (12) and place it down again and that subsequently, image processing is carried out again.

13. The optimization method according to one of claims 5 to 12, **characterized in that** in the special handling step, the robot (4) is controlled to move the robot head (6) to the first article carrier (3) and to place down or drop the picked-up article (12) on/onto or in/into the first article carrier (3).

14. The optimization method according to one of claims 1 to 13, **characterized in that**, in the preparation step, for the allocated range, the normalization value (17, 24) is defined as mean value of a normal distribution.

15. The optimization method according to one of claims 1 to 14, **characterized in that** the scattering measure function comprises an expectation-maximization algorithm and that determined values, dimensions and/or weight values are iteratively grouped into local clusters.

16. The optimization method according to claim 15, **characterized in that** a probability distribution, in particular a normal distribution, is applied to the grouped values, and that for local clusters, a mean value and a mean value scatter are determined, and the mean value is defined as the normalization value (17, 24).

17. The optimization method according to one of claims 1 to 15, **characterized in that** the scattering measure function comprises a sum of weighted normal distributions (mixture of Gaussians) and determined values, dimensions and/or weight values are iteratively grouped into local clusters.

18. The optimization method according to one of claims 1 or 3 to 17, or one of claims 2 to 17, **characterized in that**, in an adaptation step, the dimension ranges are adapted to the normalization values (17) determined in the preparation step, or that,
in the adaptation step, the weight ranges are adapted to the normalization values (24) determined in the preparation step.

19. The optimization method according to one of claims 1 to 18, **characterized in that**, for each dimension range and/or each weight range the confidence value is determined from a scattering of the normalization value (17, 24), and/or that the confidence value is determined from the number of preparation steps performed.

20. The optimization method according to one of claims 1 to 19, **characterized in that**, when forming the normalization and confidence value, a window function is applied, in each case, to the determined dimensions and article weights.

21. The optimization method according to one of claims 1 to 20, **characterized in that** the article reference data is transmitted by means of a superordinate warehouse management system to the preparation and analysis system (10), where it is stored in a storage means.

22. The optimization method according to one of claims 1 to 21, **characterized in that**, when article reference data is missing, a series of article transfers between the first and the second article carrier (3) is carried out, and the article parameter field with normalization values (17, 24) and confidence values for dimensions and/or article weights is created from the respectively determined dimensions and/or article weights.

23. The optimization method according to claim 22, **characterized in that** a fluctuation range is determined from a series of normalization or confidence values of the dimensions and/or of the article weights, and the article transfers are stopped when falling below a threshold of the fluctuation range.

24. The optimization method according to one of claims 1 to 23, **characterized in that**, in case of a high confidence value for the dimension normalization value (17) or for a weight normalization value (24), an automated or semi-automated update of the article reference data is carried out.

25. A workstation, in particular picking station, comprising

   - a provisioning device for one or multiple article carrier(s) (3),
   - a robot (4) with a robot head (6) that is movable with respect to a robot base (7), which robot head (6) has a gripping unit (5) for transferring articles (12) between article carriers (3),
   - an image capturing device, and
   - a data processing unit configured for controlling the robot (4) and also for evaluating data from the image capturing device,

   **characterized in that**
   the data processing unit is configured for performing a method according to one of claims 1 to 24.

## Revendications

1. Procédé d'optimisation pour l'amélioration de la fiabilité d'une prise en charge et d'une distribution de marchandises (12) en fonction d'une commande dans un procédé de préparation de commandes avec un robot (4), ce robot (4) comprenant une tête de robot (6), mobile par rapport à une base de robot (7), avec une unité de préhension (5), dans lequel une marchandise (12) est prise en charge avec l'unité de préhension (5) de ou hors d'un premier support de marchandises (3) et est déposé ou jeté dans ou sur un deuxième support de marchandises (3),

dans lequel, dans une étape de traitement d'image au moyen d'un système de préparation et d'analyse (10), une taille de surface de préhension et une posture de surface de préhension sont déterminées et une posture de préhension pour l'unité de préhension (5) est calculée à partir de celles-ci, l'unité de préhension (5) est déplacée vers la posture de préhension calculée et la marchandise (12) est prise en charge par l'unité de préhension (5), **caractérisé en ce que**, dans l'étape de traitement d'image,

• lors de la détermination de la taille de la surface de préhension, au moins une dimension est déterminée, dans lequel l' au moins une dimension est déterminée en créant, à l'aide d'un moyen d'enregistrement d'image optique, relié au système de préparation et d'analyse (10) à capteurs optiques, une représentation (11) des marchandises (12) dans ou sur le premier support de marchandises (3) et
• une comparaison de cette dimension avec des plages de dimensions permet de déterminer une attribution de plage, dans lequel les plages de dimensions sont enregistrées dans un champ de données caractéristiques de marchandises et
• pour cette attribution de plage, une valeur de dimension est déterminée et est attribuée à la dimension déterminée, dans lequel la valeur de dimension est choisie en fonction d'une valeur de confiance de la plage de dimensions, dans lequel, dès que la valeur de confiance se trouve au-dessus d'une valeur seuil déterminée, une valeur de normalisation (17, 24) est choisie comme valeur de dimension, en dessous de ce seuil,

la valeur de dimension est choisie parmi des données de référence des marchandises, dans lequel la valeur de normalisation (17, 24) et la valeur de confiance de la plage de dimensions sont enregistrées dans le champ de données caractéristiques et
dans une étape de préparation

• lors de chaque détermination de valeurs de dimensions, pour la dimension déterminée et pour les plages de dimensions, une fonction de mesure de dispersion mathématique est appliquée et les valeurs de normalisation (17, 24) et les valeurs de confiance des plages de dimensions sont adaptées à partir de celle-ci.

2. Procédé d'optimisation selon la revendication 1, **caractérisé en ce que** dans une étape de comptage, en aval de la prise en charge de la marchandise (12) par l'unité de préhension (5), le nombre de marchandises (12) prises en charge est déterminé

• en déterminant, à l'aide d'un dispositif de pesage (20), un poids de marchandise et
• en comparant le poids des marchandises avec des plages de poids qui sont enregistrées dans le champ de données caractéristiques, et en déterminant une attribution de plage et
• en déterminant, pour cette attribution de plage, une valeur numérique, dans lequel la détermination est effectuée en fonction d'une valeur de confiance de la plage de poids à partir de données de référence des marchandises enregistrées à partir d'une valeur de normalisation (24) de la plage de poids,

dans lequel la valeur de normalisation et la valeur de confiance de la plage de poids sont enregistrées dans le champ de données caractéristiques des marchandises, et dans l'étape de préparation

• pour le poids de marchandise et pour les plages de poids, une fonction de mesure de dispersion mathématique est appliquée et des valeurs de normalisation (24) et des valeurs de confiance des plages de poids sont déterminées à partir de celle-ci.

3. Procédé d'optimisation selon la revendication 2, **caractérisé en ce que** en alternative à la comparaison du poids de marchandise déterminé avec des plages de poids,

• à partir du poids de la marchandise déterminé par le dispositif de pesage et d'une valeur de normalisation (24) du poids, un quotient est formé et
• le quotient est mis à l'échelle et est comparé avec des plages de poids et
• une attribution de plage est déterminée.

4. Procédé d'optimisation selon la revendication 2 ou 3, **caractérisé en ce que** le dispositif de pesage (20) est disposé séparément du robot (4), plus particulièrement de l'unité de préhension (5), et le poids du premier support de marchandises (3) est mesuré et l'étape de comptage a lieu avant la distribution de la marchandise (12), plus particulièrement après la prise en charge de la marchandise (12) sur le premier support de marchandise (3) et avant que l'unité de préhension (5) atteigne le deuxième support de marchandises (3).

5. Procédé d'optimisation selon l'une des revendications 2 à 4, **caractérisé en ce que**, dans le cas d'une valeur numérique déterminée supérieure à un, une vérification a lieu afin de savoir si la valeur numérique déterminée dépasse la quantité de consigne de la marchandise à préparer (12), dans lequel la quantité de consigne est enregistrée dans la commande et, dans le cas d'un dépassement, une étape de traitement spéciale est exécutée.

6. Procédé d'optimisation selon l'une des revendications 2 à 4, **caractérisé en ce que**, dans le cas d'un dépassement d'une valeur limite de la valeur numérique ou lors d'un dépassement d'une valeur limite de plage lors de la détermination de l'attribution de plage, une étape de traitement spéciale est exécutée.

7. Procédé d'optimisation selon l'une des revendications 2 à 6, **caractérisé en ce que** la valeur de normalisation (24) du poids est formée au moyen d'une fonction de pondération mathématique à partir de toutes les valeurs de normalisation (24) des plages de poids.

8. Procédé d'optimisation selon l'une des revendications 3 à 7, **caractérisé en ce que**, pour la valeur après la virgule du quotient, une classification des plages est effectuée, dans lequel, pour une première plage, la valeur numérique est définie par la partie entière du quotient et, pour une deuxième plage, un traitement spécial est effectué.

9. Procédé d'optimisation selon la revendication 8, **caractérisé en ce que**, pour une troisième plage, les valeurs de confiance des deux plages de poids adjacentes sont analysées et le poids de la marchandise est déterminée à partir de la valeur de normalisation (24) de la plage de poids avec la valeur de confiance la plus élevée.

10. Procédé d'optimisation selon l'une des revendications 1 à 9, **caractérisé en ce que**, pour la dimension déterminée lors de la détermination de l'attribution de plage, une vérification est effectuée afin de savoir si la dimension déterminée se trouve dans une plage de superposition de deux plages de dimensions et, dans le cas d'une vérification positive, une étape de traitement spéciale est exécutée.

11. Procédé d'optimisation selon la revendication 10, **caractérisé en ce que**, lorsque la position de la dimension dans la plage de superposition est déterminée, une étape de traitement spéciale, l'étape de traitement d'image est à nouveau exécutée.

12. Procédé d'optimisation selon la revendication 10 ou 11, **caractérisé en ce que**, dans l'étape de traitement spéciale, le robot (4) est contrôlé afin de déplacer la tête de robot (6) vers le premier support de marchandises (3), de prendre en charge une marchandise (12) et de la déposer à nouveau et **en ce que** le traitement d'image est ensuite effectué à nouveau.

13. Procédé d'optimisation selon l'une des revendications 5 à 12, **caractérisé en ce que**, dans l'étape de traitement spéciale, le robot (4) est contrôlé afin de déplacer la tête de robot (6) vers le premier support de marchandises (3) et de déposer ou de jeter la marchandise (12) prise en charge sur ou dans le premier support de marchandises (3).

14. Procédé d'optimisation selon l'une des revendications 1 à 13, **caractérisé en ce que**, dans l'étape de préparation, pour la plage attribuée, la valeur de normalisation (17, 24) est définie comme la valeur moyenne d'une distribution normale.

15. Procédé d'optimisation selon l'une des revendications 1 à 14, **caractérisé en ce que** la fonction de mesure de dispersion comprend un algorithme Expectation-Maximation et **en ce que** les valeurs, dimensions ou valeurs de poids déterminées sont regroupées de manière itérative en accumulations locales.

16. Procédé d'optimisation selon la revendication 15, **caractérisé en ce que**, aux valeurs regroupées est appliquée une distribution de probabilité, plus particulièrement une distribution normale, et **en ce que**, pour les accumulations locales, une valeur moyenne et une dispersion de valeur moyenne sont déterminées et la valeur moyenne est définie comme valeur de normalisation (17, 24).

17. Procédé d'optimisation selon l'une des revendications 1 à 15, **caractérisé en ce que** la fonction de mesure de dispersion comprend une somme de distributions normales pondérées (Mixture of Gaussians) et les valeurs, dimensions ou valeurs de poids déterminées sont regroupées de manière itérative en accumulations locales.

18. Procédé d'optimisation selon l'une des revendications 1 ou 3 à 17, ou l'une des revendications 2 à 17, **caractérisé en ce que**, dans une étape d'adaptation, les plages de dimensions sont adaptées aux valeurs de normalisation (17) déterminées dans l'étape de préparation ou **en ce que**, dans l'étape d'adaptation, les plages de poids sont adaptées aux valeurs de normalisation (24) déterminées dans l'étape de préparation.

**19.** Procédé d'optimisation selon l'une des revendications 1 à 18, **caractérisé en ce que**, pour chaque plage de dimensions et/ou chaque plage de poids, la valeur de confiance est déterminée à partir d'une dispersion de la valeur de normalisation (17, 24) et/ou **en ce que** la valeur de confiance est déterminée à partir du nombre d'étapes de préparation exécutées.

**20.** Procédé d'optimisation selon l'une des revendications 1 à 19, **caractérisé en ce que**, lors de la formation de la valeur de normalisation et de confiance, une fonction de fenêtre est appliquée respectivement aux dimensions et poids de marchandises déterminés.

**21.** Procédé d'optimisation selon l'une des revendications 1 à 20, **caractérisé en ce que** les données de référence des marchandises sont transmises, par un système de gestion de stock principal au système de préparation et d'analyse (10) et enregistrées, dans celui-ci, dans une mémoire.

**22.** Procédé d'optimisation selon l'une des revendications 1 à 21, **caractérisé en ce que**, si les données de référence des marchandises sont manquantes, une suite de transferts de marchandises entre les premier et deuxième supports de marchandises (3) est effectuée et, à partir des dimensions ou poids de marchandises déterminés respectivement, le champ de données caractéristiques des marchandises est établi avec des valeurs de normalisation (17, 24) et des valeurs de confiance pour les dimensions et/ou les poids des marchandises.

**23.** Procédé d'optimisation selon la revendication 22, **caractérisé en ce que**, à partir d'une suite de valeurs de normalisation ou de confiance des dimensions et/ou des poids des marchandises, une marge de fluctuation est déterminée et les transferts de marchandises sont terminés lorsque cette marge de fluctuation tombe en dessous d'un seuil.

**24.** Procédé d'optimisation selon l'une des revendications 1 à 23, **caractérisé en ce que**, dans le cas d'une valeur de confiance élevée pour une valeur de normalisation de dimension (17) ou pour une valeur de normalisation de poids (24), une actualisation automatisée ou partiellement automatisée des données de référence des marchandises est effectuée.

**25.** Poste de travail, plus particulièrement poste de préparation de commandes, comprenant

- un dispositif de présentation pour un ou plusieurs supports de marchandises (3),
- un robot (4) avec une tête de robot (6), mobile par rapport à une base de robot (7), avec une unité de préhension (5) pour le transfert des marchandises (12) entre des supports de marchandises (3),
- un dispositif d'enregistrement d'images et
- une unité de traitement de données conçue pour le contrôle du robot (4) et, en outre, pour l'analyse des données du dispositif d'enregistrement d'images,

**caractérisé en ce que**
l'unité de traitement de données est conçue pour l'exécution d'un procédé selon l'une des revendications 1 à 24.

Fig.1

Fig.2

Nx;Cx = f(w1)

# Fig.3

EP 3 884 349 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016100235 A1